# EUROPÄISCHE PATENTSCHRIFT

(11) **EP 3 418 591 B1**
(45) Veröffentlichungstag und Bekanntmachung des Hinweises auf die Patenterteilung: **04.09.2024**
(21) Anmeldenummer: 18178039.6
(22) Anmeldetag: 15.06.2018
(51) Int. Cl.: F16B 21/08, F16B 5/06, B60R 13/02

(54) **ANORDNUNG MIT MINDESTENS EINEM SCHNAPPHAKEN**
ASSEMBLY WITH AT LEAST ONE SNAP HOOK
DISPOSITIF POURVU D'AU MOINS UN CROCHET D'ENCLIQUETAGE

(30) Priorität: 19.06.2017 DE 102017113409; 12.04.2018 DE 102018108714
(43) Veröffentlichungstag der Anmeldung: 26.12.2018
(73) Patentinhaber: Dr. Schneider Kunststoffwerke GmbH, 96317 Kronach-Neuses (DE)
(72) Erfinder: KAMM, Daniel, 96264 Altenkunstadt (DE); HOEN, Pascal, 96450 Coburg (DE); DICKSCHAS, Uwe, 91088 Bubenreuth (DE)
(74) Vertreter: Isarpatent

(56) Entgegenhaltungen:
- EP-A2- 0 838 367
- DE-C1- 19 511 137
- DE-U1- 9 201 258

## Beschreibung

Es werden ein Schnapphaken für eine spielfreie und robuste Verrastung zweier Komponenten und eine Anordnung mit mindestens einem Schnapphaken und einer korrespondierenden Rasteinrichtung beschrieben.

Schnapphaken werden in verschiedenen Gebieten dazu eingesetzt, um zwei Komponenten fest miteinander zu verbinden. Dabei können die Schnapphaken so ausgebildet sein, dass ein Lösen der Verbindung möglich ist. In weiteren Gestaltungsformen soll jedoch verhindert werden, dass der Schnapphaken und damit die Verbindung der Komponenten wieder gelöst wird. Schnapphaken finden sich insbesondere bei der Verbindung zweier Kunststoffteile, wobei der Haken teilweise elastisch ausgebildet ist. Der Schnapphaken selbst oder Teile davon können relativ zu einer Komponente verformt werden, sodass ein Überfahren eines Rastelements erfolgt. Ein Verriegelungsabschnitt des Schnapphakens hintergreift dann das Rastelement.

Schnapphaken und Verbindungen mit Schnapphaken finden sich unter anderem auch bei Kraftfahrzeugen. Vor allem im Innenbereich werden oftmals dekorative Elemente mittels solcher Schnappverbindungen an weiteren Elementen angebracht. Auch Funktionsbauteile aus Kunststoff werden häufig über Schnappverbindungen miteinander verbunden. Beispielsweise können Blenden von Luftausströmen über eine Schnappverbindung mit Schnapphaken an einem Gehäuse angebracht sein. Weiterhin können auch dekorative Blenden im Bereich eines Fahrzeugarmaturenbretts, einer Mittelkonsole oder Seitenwandverkleidungen über Schnappverbindungen mit einem Träger verbunden sein.

### Stand der Technik

Im Stand der Technik erfolgt die Verrastung von Blenden bei Luftausströmen mit Hilfe eines Schnapphakens, der auftretende Toleranzen zwischen Rastflächen nicht ausgleicht. Die Rastflächen sind die Flächen, an welchen ein Schnapphaken und ein Rastelement aneinander liegen. Aufgrund von Toleranzen liegen dabei die Rastflächen nicht direkt aneinander an, sodass beispielsweise der Schnapphaken und die Komponente, an welcher der Schnapphaken befestigt ist, zu einer weiteren Komponente bewegt werden können. Dies führt bei der Auslegung der Rastflächen auf Kontakt entweder zu Spiel in der Verrastung oder zum Nicht-Einrasten eines Hakens aufgrund von Überlappung. Um dieses Problem zu minimieren sind Rastflächen in Rastrichtung angeschrägt, was allerdings auch ein Risiko bezüglich der Rastsicherheit darstellt, da der Haken durch die angeschrägten Flächen bei Zug zum Entrasten neigt. Darüber hinaus besteht die Gefahr des Nicht-Einrastens während der Montage, sodass jede Rastverbindung überprüft und gegebenenfalls per Hand verrastet werden muss.

Da nicht sichergestellt werden kann, dass immer alle Haken von Schnapphaken einrasten, sind eine visuelle Kontrolle und gegebenenfalls eine Nacharbeit notwendig. Neben einem Nicht-Einrasten der Haken kann gegebenenfalls bei umgekehrten Toleranzketten auch Spiel in den Verrastungen auftreten. Weiterhin schwächen die angeschrägten Rastflächen eine Blende bei nicht sachgemäßer Verwendung, sodass ein Abziehen der Blende mit definierten Missbrauchskräften möglich ist.

Hakenanordnungen sind zum Beispiel aus DE 10 2013 202 146 A1, DE 10 2007 048 245 B3 und DE 195 11 137 C1 bekannt. Diese Anordnungen verursachen jedoch Klappergeräusche und sind bei der Fertigung aufwendig zu überwachen.

Aus EP 0 838 367 A2 ist eine Vorrichtung zur Befestigung eines Scheinwerfers oder einer Leuchte an einem oder mehreren Fahrzeugteilen bekannt. Der Scheinwerfer oder die Leuchte sind in einer durch mindestens zwei Karosserieteile gebildeten Öffnung haltbar, wobei der Scheinwerfer oder die Leuchte durch zwischen den Fahrzeugteilen und den die Öffnung bildenden Karosserieteilen wirkende Federkräfte in der Öffnung haltbar sind. Hierzu ist ein Befestigungsmittel vorgesehen, das ein Federmittel aufweist, wobei ein Ende des Befestigungsmittels an einem Gehäuse des Scheinwerfers oder der Leuchte und das andere Ende an einem Karosserieteil angeordnet sind.

Die aus dem Stand der Technik bekannten Schnapphaken und Verbindungen mittels Schnapphaken erfordern daher umfangreiche visuelle Kontrollen und Nacharbeiten. Ein weiterer Nachteil ist das Spiel in der Verrastung, welches zu Klappergeräuschen führt, da die Komponenten relativ zueinander bewegt werden können. Zudem ist oftmals ein leichtes Abziehen einer Komponente von einer weiteren Komponente möglich.

### Aufgabe

Es ist daher Aufgabe eine sichere, definierte und spielfreie Verrastung bei gleichzeitiger Einhaltung von Toleranzen bereitzustellen, wobei visuelle Kontrollen und Nacharbeiten minimiert sind, und wobei das Spiel bei einer Verrastung und dadurch Klappergeräusche eliminiert sind.

### Lösung

Die Aufgabe wird durch eine Anordnung, aufweisend mindestens einen Schnapphaken für eine spielfreie und robuste Verrastung zweier Komponenten und mindestens eine korrespondierende Rasteinrichtung gelöst, wobei
- der mindestens eine Schnapphaken einen Basisabschnitt und einen Verriegelungsabschnitt aufweist,
- der Basisabschnitt und der Verriegelungsabschnitt über einen flexiblen Abschnitt miteinander verbunden sind und der flexible Abschnitt federnde Eigenschaften aufweist,
- der flexible Abschnitt einen schräg sich vom Basisabschnitt bis zu einem Verbindungsbereich erstreckenden ersten Arm und einen sich wiederum schräg von dem Verbindungsbereich erstreckenden zweiten Arm aufweist, an dessen Ende der Verriegelungsabschnitt ausgebildet ist,
- der Verriegelungsabschnitt einen Abschnitt mit einer Schräge aufweist,
- der mindestens eine Schnapphaken an einer ersten Komponente und die mindestens eine korrespondierende Rasteinrichtung an einer zweiten Komponente angeordnet sind,
- im verrasteten Zustand des mindestens einen Schnapphakens und der mindestens einen korrespondierenden Rasteinrichtung der Verriegelungsabschnitt des mindestens einen Schnapphakens mindestens einen Rastabschnitt der mindestens einen Rasteinrichtung hintergreift,
- der flexible Abschnitt gegenüber einem nicht verrasteten Zustand gespannt ist, und
- die mindestens eine Rasteinrichtung ein Halteelement aufweist, welches im eingesetzten Zustand des mindestens einen Schnapphakens einen Druck auf den flexiblen Abschnitt ausübt,
dadurch gekennzeichnet, dass die mindestens eine Rasteinrichtung bügelförmig ausgeführt ist und dieser Bügel eine Wand und ein der Wand gegenüberliegendes Rastelement mit dem mindestens einen Rastabschnitt aufweist, wobei sich die Wand und das gegenüberliegende Rastelement in Einschubrichtung des mindestens einen Schnapphakens erstrecken und während des Einbringens des mindestens einen Schnapphakens durch den Bügel der mindestens einen Rasteinrichtung hindurch der erste Arm und der zweite Arm über deren Verbindungsbereich an der Wand und der Verriegelungsabschnitt über die Schräge das Rastelement relativ zueinander und relativ zum Basisabschnitt verformbar sind und nach dem Überfahren des mindestens einen Rastabschnitts der zweite Arm zurückfedert und den mindestens einen Rastabschnitt hintergreift.

Der Schnapphaken ermöglicht eine spielfreie Verrastung zweier Komponenten, da bei einer Verrastung der Verriegelungsabschnitt unter Spannung einen Rastabschnitt eines korrespondierenden Rastelements einer Rasteinrichtung hintergreifen kann. Der flexible Abschnitt ist daher in einem verrasteten Zustand gespannt. Dadurch, dass der flexible Abschnitt gespannt ist, herrscht kein Spiel bei der Verrastung vor. Das Erreichen einer Endstellung, in welcher der Verriegelungsabschnitt den Rastabschnitt hintergreift, kann durch ein definiertes Überdrücken des Schnapphakens beim Einführen in eine entsprechende Rasteinrichtung erfolgen. In weiteren Ausführungen erfolgt das Hintergreifen eines Rastabschnitts ohne ein Überdrücken.

Die Ausbildung des flexiblen Abschnitts kann verschiedenartig sein. Aufgrund der federnden Eigenschaften ist der flexible Abschnitt so ausgebildet, dass dieser eine Verlagerung des Basisabschnitts relativ zu dem Verriegelungsabschnitt ermöglicht. Die Verlagerung kann sowohl durch eine im Wesentlichen geradlinig erfolgende Längung als auch durch ein Verschwenken des flexiblen Abschnitts und damit des Verriegelungsabschnitts relativ zu dem Basisabschnitt erfolgen. Hierbei kann der flexible Abschnitt Energie speichern.

Die Längung des flexiblen Abschnitts erfolgt durch einen korrespondierenden Abschnitt einer Rasteinrichtung (Bügel). Beim Einbringen des Schnapphakens wird daher zwangsläufig eine sichere Verrastung erreicht.

Der Verriegelungsabschnitt weist einen abgeschrägten Bereich auf. Der abgeschrägte Bereich befindet sich an der Vorderseite des Schnapphakens, wodurch ein Einführen des Schnapphakens in eine entsprechende Rasteinrichtung erleichtert ist. Der abgeschrägte Bereich des Verriegelungsabschnitts erleichtert das Überfahren einer Rampe, die ein Teil eines Rastelements der Rasteinrichtung ist. Nach dem Überfahren der Rampe hintergreift der Verriegelungsabschnitt einen Rastabschnitt des Rastelements, wobei diese Rastfläche des Verriegelungsabschnitts vorzugsweise nicht oder gegensinnig zur Einrastrichtung abgeschrägt ist, so dass sich eine annähernde Linienauflage mit Erhöhung der Flächenpressung zum Rastabschnitt ergibt. Hierdurch wird eine sichere Verbindung durch ein Hintergreifen erreicht. Zudem wird ein Abziehen des Schnapphakens erschwert.

Der erste Arm und der zweite Arm ermöglichen ein Verschwenken des Schnapphakens, wobei der "Drehpunkt" beim Einbringen des Schnapphakens in eine entsprechende Rasteinrichtung im Verbindungsbereich zwischen dem ersten Arm und dem zweiten Arm liegt. Insbesondere bei Kunststoffteilen lässt sich ein solcher flexibler Abschnitt leicht herstellen.

Der erste Arm und der zweite Arm bilden Rastarme, wobei der erste Arm schräg an dem Basisabschnitt angeordnet ist. Dabei nimmt der Abstand zu einem zusätzlichen weiteren Haken oder einem anderen Element ausgehend vom Basisabschnitt zu, wobei der Haken und das andere Element sich orthogonal zum Basisabschnitt erstrecken. Der Haken oder das Element dienen als Überlastschutz und verhindern eine Beschädigung des Schnapphakens, wenn Zug auf die verrastete Verbindung aufgebracht wird. Beim Einbringen des Schnapphakens in eine Rasteinrichtung werden die Rastarme bzw. der erste Arm und der zweite Arm gedreht bzw. gedehnt. Dabei wird von einer Wand der Rasteinrichtung auf den Verbindungsbereich des ersten Arms und des zweiten Arms ein Druck ausgeübt. Auf der gegenüberliegenden Seite gleitet der Verriegelungsabschnitt an einem Rastelement der Rasteinrichtung. In der verriegelten Stellung hintergreift der Verriegelungsabschnitt an einem vorderen Abschnitt des zweiten Arms einen entsprechenden Abschnitt des Rastelements der Rasteinrichtung.

Am Basisabschnitt kann ein dritter Arm angeordnet sein, der sich orthogonal vom Basisabschnitt erstreckt und eine Abzugssicherung quer zur Verriegelung über den Verriegelungsabschnitt bereitstellt.

Der erste Arm kann unter einem Winkel zwischen 50° und 80° zum Basisabschnitt angeordnet sein.

Der zweite Arm kann unter einem Winkel zwischen 60° und 90° zum ersten Arm angeordnet sein.

Darüber hinaus weist der Verriegelungsabschnitt einen Abschnitt mit einer Schräge auf, dessen Weite kann in Einführrichtung des Schnapphakens zunehmen. Der Verriegelungsabschnitt gleitet beim Einbringen des Schnapphakens in eine Rasteinrichtung an einer korrespondierenden Wand des Rastelements entlang. Dabei sind der zweite Arm und der Verriegelungsabschnitt ausgelenkt und vorgespannt. Der erste Arm kann dabei ebenfalls vorgespannt sein. Die Ausbildung des Abschnitts mit der zunehmenden Weite erleichtert das Einbringen des Schnapphakens. Nach dem Überfahren der korrespondierenden Wand des Rastelements der Rasteinrichtung kehren der zweite Arm und der Verriegelungsabschnitt in ihre Ausgangsstellung zurück.

In weiteren Ausführungen kann der Abschnitt einen Haken aufweisen, der entgegengesetzt zur Einführrichtung des Schnapphakens gerichtet ist. Der Haken hintergreift den Rastabschnitt des Rastelements der Rasteinrichtung und stellt die Verriegelung bereit. Der Haken ist vorzugsweise als Verlängerung des Abschnitts ausgebildet. Dadurch wird erreicht, dass nach dem Überfahren der korrespondierenden Wand des Rastelements automatisch ein Hintergreifen der Wand oder eines entsprechenden Abschnitts der Wand erfolgt.

In weiteren Ausführungsformen ist an dem Basisabschnitt ein erster Anschlag angeordnet. Der erste Anschlag kann in Kombination mit dem flexiblen Abschnitt ein Spannen des flexiblen Abschnitts in einer verrasteten Stellung bereitstellen. Hierzu kann der erste Anschlag einen Bügel einer Rasteinrichtung beim Einführen des Schnapphakens verformen, sodass dieser in Richtung eines Rastelements gedrückt wird. Durch die Verformung des Bügels können der Schnapphaken und insbesondere der Verriegelungsabschnitt weiter in die Rasteinrichtung hineingeschoben werden. Dadurch überfährt der Verriegelungsabschnitt einen Rastabschnitt und hintergreift diesen Rastabschnitt. Wird kein Druck mehr auf den Schnapphaken aufgebracht, verbleibt der Verriegelungsabschnitt in der verriegelten Stellung und hintergreift den Rastabschnitt, wobei jedoch der Bügel wieder seine ursprüngliche Form einnimmt. Der Bügel drückt den Basisabschnitt des Schnapphakens über den ersten Anschlag zurück, wobei aufgrund der verriegelten Stellung des Verriegelungsabschnitts der flexible Abschnitt diesen Längenausgleich kompensiert und dabei gespannt wird. Der erste Anschlag drückt in der verriegelten Stellung gegen den Bügel und der Verriegelungsabschnitt drückt gegen den Rastabschnitt. Über den flexiblen Abschnitt werden der Verriegelungsabschnitt und der Basisabschnitt in ihrer Stellung gehalten, sodass kein Spiel in der Verrastung auftritt.

Der erste Anschlag kann insbesondere in einer Ebene verlaufen, die sich orthogonal zu einer Ebene erstreckt, in der sich der Basisabschnitt, der flexible Abschnitt und der Verriegelungsabschnitt erstrecken. Vorzugsweise befindet sich der erste Anschlag dabei an einer oberen Seite bzw. an der Seite des Basisabschnitts, welcher einem Fuß bzw. Verbindungsabschnitt eines Bügels einer Rasteinrichtung entgegengesetzt ist. Hierdurch kann der erste Anschlag ein größeres Moment auf den Bügel beim Eindrücken aufbringen.

Der erste Anschlag kann sich in weiteren Ausführungen im Bereich des dritten Arms befinden.

In weiteren Ausführungen weist der Basisabschnitt keinen ersten Anschlag auf. Ein solcher Anschlag kann stattdessen an einem Bügel einer Rasteinrichtung angeordnet sein. Hierdurch können Einfallstellen an der Komponente, an welcher der Schnapphaken angeordnet ist, verhindert werden. Vor allem bei Kunststoffteilen können Einfallstellen auftreten.

Der Schnapphaken kann in weiteren Ausführungsformen zusätzlich einen Überlastschutz aufweisen, der den flexiblen Abschnitt vor Zerstörung schützt. Der Überlastschutz wird über den dritten Arm mit einem Haken bereitgestellt. Im verriegelten Zustand des Schnapphakens kann ein erhöhter Zug auf den flexiblen Abschnitt zu einer Beschädigung des flexiblen Abschnitts und damit zu einer Beschädigung des Schnapphakens führen. Hierdurch kann eine Verbindung zweier Komponenten gelöst werden oder nicht mehr die erforderliche Verbindung aufweisen. Der Überlastschutz ist eine Einrichtung an dem Schnapphaken, die im verriegelten Zustand diesen unterstützt bzw. dafür sorgt, dass dieser aufrechterhalten bleibt. Der Überlastschutz kann beispielsweise durch den dritten Arm und einen Haken am dritten Arm gebildet sein.

Der Überlastschutz weist einen am Basisabschnitt angeordneten, abstehenden Haken auf, der am dritten Arm angeordnet und der dazu ausgebildet ist, im verrasteten Zustand des Schnapphakens eine Hakenanordnung (z.B. einen Widerhaken) einer Rasteinrichtung zu hintergreifen. Die Hakenanordnung kann dabei eine Schräge aufweisen. Beim Überfahren des Rastabschnitts durch den Verriegelungsabschnitt erfolgt ebenfalls ein Überfahren der Hakenanordnung durch den Haken an dem Basisabschnitt. Nachdem der Verriegelungsabschnitt den Rastabschnitt hintergreift und damit verriegelt ist, hintergreift der Haken an dem Basisabschnitt auch die Hakenanordnung. Wird nun versucht eine Komponente bzw. den Schnapphaken aus der verriegelten Stellung zu bringen, so wird durch die direkte Anlage des Verriegelungsabschnitts an einem Rastabschnitt der flexible Abschnitt gespannt. Die Spannung wird jedoch nur soweit durchgeführt, bis der Haken an dem Basisabschnitt an einer Verriegelungsfläche der Hakenanordnung anliegt. Bei einem weiteren Zug auf die Hakenanordnung wird nicht weiter der flexible Abschnitt gespannt, sondern der Haken an dem Basisabschnitt verhindert eine weitere Verlagerung durch die direkte Anlage an der Hakenanordnung. Vorzugsweise befinden sich die Verriegelungsfläche des Hakens und die Verriegelungsfläche der Hakenanordnung im verrasteten Zustand des Schnapphakens beabstandet zueinander. Das bedeutet, dass bis zum Eigreifen des Überlastschutzes der flexible Abschnitt um ein gewisses Maß weitergespannt wird.

Der Überlastschutz kann aber auch durch einen an einem Bügel oder einer anderen Komponente eines Bauteils angeordneten gefederten Abschnitt und einen Haken am Schnapphaken bereitgestellt werden. Beim Einbringen des Schnapphakens wird der gefederte Abschnitt leicht angehoben und der Haken gleitet an dem Abschnitt entlang. In einer verrasteten Stellung des Schnapphakens wird bei einem Abziehversuch zuerst der flexible Abschnitt um ein bestimmtes Maß weiter gespannt, bis der Haken an dem gefederten Abschnitt anliegt. Hierzu weist der Haken eine Rampe und eine Schräge auf, wobei die Rampe in Einschubrichtung ein "Überfahren" bzw. ein Entlanggleiten am gefederten Abschnitt unterstützt und in der verrasteten Stellung die Schräge am Haken gegen einen vorderen Bereich des gefederten Abschnitts drückt. Hierbei wird der gefederte Abschnitt nach "unten" bzw. gegen die Oberfläche des Schnapphakens gedrückt, an welcher der Haken angeordnet ist. Es erfolgt eine Verriegelung als Überlastschutz, welche nur durch eine Zerstörung der Komponenten aufgehoben werden kann. Ein Abziehen einer Komponente von einem Bauteil wird damit verhindert. Zusätzlich wird der gefederte Abschnitt nicht durch hohe Zugkräfte zerstört.

In weiteren Ausführungen kann ein Überlastschutz auch durch einen Haken an einem Hakenarm gebildet sein, der wie Federarme oder Rastarme am Basisabschnitt angeordnet ist. Beim Einbringen des Schnapphakens wird der Haken mit einer Schräge in Einschubrichtung niedergedrückt und erlaubt ein Einschieben. In der entgegengesetzten Richtung liegt die Rückseite des Hakens beim Abziehen bspw. an einem Bügel an.

Eine noch weitere Möglichkeit eines Überlastschutzes umfasst mindestens zwei Haken, die bspw. über Hakenarme an einem Basisabschnitt angeordnet sind. Die Haken weisen eine Schräge in Einschubrichtung auf, so dass ein Einbringen des Schnapphakens leicht durchgeführt werden kann. An der Rückseite weisen die Haken eine gerade Seite oder eine solche Schräge auf, dass ein Abziehen des Schnapphakens verhindert wird. Die beiden Haken können insbesondere so ausgebildet und angeordnet sein, dass diese in orthogonal zueinander verlaufenden Richtungen ausgelenkt werden können. Hierüber wird eine verbesserte Abzugssicherung bereitgestellt.

Der Schnapphaken kann aus Kunststoff oder Metall bestehen. Beispielsweise kann der Schnapphaken auch aus einer Metalllegierung oder einem Kunststoff mit Zusätzen gebildet sein. Vorzugsweise wird der Schnapphaken einstückig hergestellt. Schnapphaken aus Kunststoff können insbesondere in einem Spritzgussprozess in hoher Stückzahl auf einfache Weise gefertigt werden. Hierdurch wird der Preis für solche Schnapphaken gering gehalten. Schnapphaken können zusätzlich an Kunststoffkomponenten angeformt sein. Beispielsweise werden die Schnapphaken beim Bilden von Kunststoffteilen mit an diese ausgebildet, sodass die fertige Komponente bereits einen daran angebrachten Schnapphaken aufweist. Entsprechend können auch die damit in Verbindung stehenden Rasteinrichtungen aus Kunststoff gebildet sein, welche beispielsweise an einer zweiten Komponente angeformt sind.

Das Spannen des flexiblen Abschnitts kann dadurch erfolgen, dass der Schnapphaken beim Einführen beispielsweise einen Bügel der Rasteinrichtung um ein gewisses Maß verformt. Hierdurch wird erreicht, dass der Verriegelungsabschnitt den Rastabschnitt hintergreift. Anschließend wird der Bügel zurückbewegt, wodurch der Abstand zwischen dem Basisabschnitt und dem Verriegelungsabschnitt vergrößert wird. Diese Vergrößerung kompensiert der flexible Abschnitt, der hierbei gespannt wird. Durch die Spannung herrscht kein Spiel bei der Verrastung vor.

Das Halteelement, welches den flexiblen Abschnitt hält bzw. einer Verlagerung der Arme quer zur definierten Verlagerung über die Rasteinrichtung entgegenwirkt, verhindert, dass die erforderliche Längung des flexiblen Abschnitts durch eine ungewollte Verlagerung reduziert wird oder nicht zum Hintergreifen des Rastabschnitts führt.

Die erste Komponente und die zweite Komponente können eine Vielzahl von Schnapphaken und damit korrespondierende Rasteinrichtungen aufweisen. In weiteren Ausführungsformen kann eine erste Komponente sowohl Schnapphaken als auch korrespondierende Rasthaken und eine zweite Komponente mit den Schnapphaken der ersten Komponente korrespondierende Rasteinrichtungen und Schnapphaken aufweisen, die mit den Rasteinrichtungen der ersten Komponente korrespondieren.

Beispielsweise kann die erste Komponente das Gehäuse eines Luftausströmers oder ein Träger und die zweite Komponente eine Blende eines Luftausströmers sein. Ferner kann die zweite Komponente beispielsweise auch ein Dekor- oder Verkleidungsteil eines Kraftfahrzeugs sein, das beispielsweise im Bereich eines Fahrzeugarmaturenbretts, einer Seitenverkleidung, einer Mittelkonsole oder im Bereich der A-, B- oder C-Säule angeordnet ist.

### Kurzbeschreibung der Figuren

Weitere Vorteile, Merkmale sowie Ausgestaltungsmöglichkeiten ergeben sich aus der nachfolgenden Figurenbeschreibung von nicht einschränkend zu verstehenden Ausgangsbeispielen.

In den Zeichnungen zeigt:
- Fig. 1: eine Draufsicht auf einen Schnapphaken einer ersten Ausführungsform;
- Fig. 2: eine Seitenansicht des Schnapphakens von Fig. 1;
- Fig. 3: eine Rückansicht des Schnapphakens von Fig. 1;
- Fig. 4: eine Vorderansicht des Schnapphakens von Fig. 1;
- Fig. 5: eine Draufsicht auf eine Rasteinrichtung, bestehend aus einem Bügel und einem Rastelement;
- Fig. 6: eine Seitenansicht der Rasteinrichtung von Fig. 5;
- Fig. 7: eine Draufsicht zweier über einen Schnapphaken gemäß der Ausführung von Fig. 1 und eine Rasteinrichtung gemäß der Ausführung von Fig. 5 verrasteter Komponenten;
- Fig. 8: eine Seitenansicht der zwei miteinander verrasteten Komponenten von Fig. 7;
- Fig. 9: eine perspektivische Darstellung zweier Komponenten, die über Schnapphaken gemäß der Ausführung von Fig. 1 und Rasteinrichtungen gemäß der Ausführung von Fig. 5 miteinander verrastet sind;
- Fig. 10: eine Draufsicht zweier über einen Schnapphaken und eine Rasteinrichtung einer zweiten Ausführungsform verrasteter Komponenten;
- Fig. 11: eine Seitenansicht der zwei miteinander verrasteten Komponenten von Fig. 10;
- Fig. 12: eine Draufsicht zweier über einen Schnapphaken und eine Rasteinrichtung einer dritten Ausführungsform verrasteter Komponenten;
- Fig. 13: eine Seitenansicht der zwei miteinander verrasteten Komponenten von Fig. 12;
- Fig. 14: eine Draufsicht zweier über einen Schnapphaken und eine Rasteinrichtung einer vierten Ausführungsform verrasteter Komponenten;
- Fig. 15: eine Draufsicht zweier über einen Schnapphaken und eine Rasteinrichtung einer fünften Ausführungsform verrasteter Komponenten;
- Fig. 16: eine perspektivische Darstellung der beiden miteinander verrasteten Komponenten von Fig. 15;
- Fig. 17: eine perspektivische Darstellung zweier Komponenten, die über Schnapphaken und Rasteinrichtungen gemäß der Ausführung von Fig. 15 miteinander verrastet sind;
- Fig. 18: eine Seitenansicht zweier über einen Schnapphaken und eine Rasteinrichtung einer sechsten Ausführungsform verrasteter Komponenten;
- Fig. 19: eine Draufsicht auf den Schnapphaken von Fig. 18;
- Fig. 20: eine perspektivische Darstellung der Rasteinrichtung von Fig. 18;
- Fig. 21: eine Draufsicht eines Schnapphakens einer siebten Ausführungsform;
- Fig. 22: eine Seitenansicht eines Schnapphakens der siebten Ausführungsform;
- Fig. 23: eine Draufsicht zweier über Schnapphaken und eine Rasteinrichtung der siebten Ausführungsform verrasteter Komponenten;
- Fig. 24: eine Draufsicht auf einen Schnapphaken und eine Rasteinrichtung der Darstellung von Fig. 23;
- Fig. 25: eine Seitenansicht auf die Darstellung von Fig. 24; und
- Fig. 26: eine perspektivische Darstellung der Ansicht von Fig. 23.

In den Zeichnungen mit gleichen Bezugszeichen versehene Komponenten entsprechen im Wesentlichen einander, sofern nichts anderes angegeben ist. Darüber hinaus wird darauf verzichtet, Bestandteile zu beschreiben und zu zeigen, welche nicht wesentlich zum Verständnis der hierin offenbarten technischen Lehre sind.

### Ausführliche Beschreibung von Ausführungsbeispielen

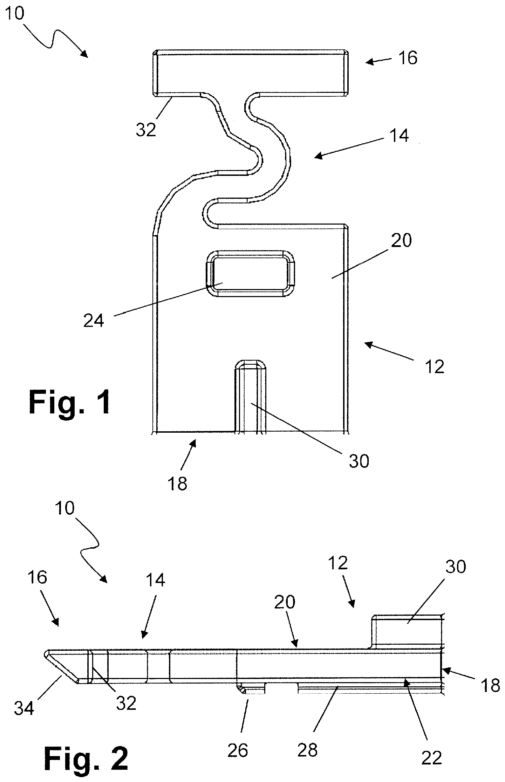

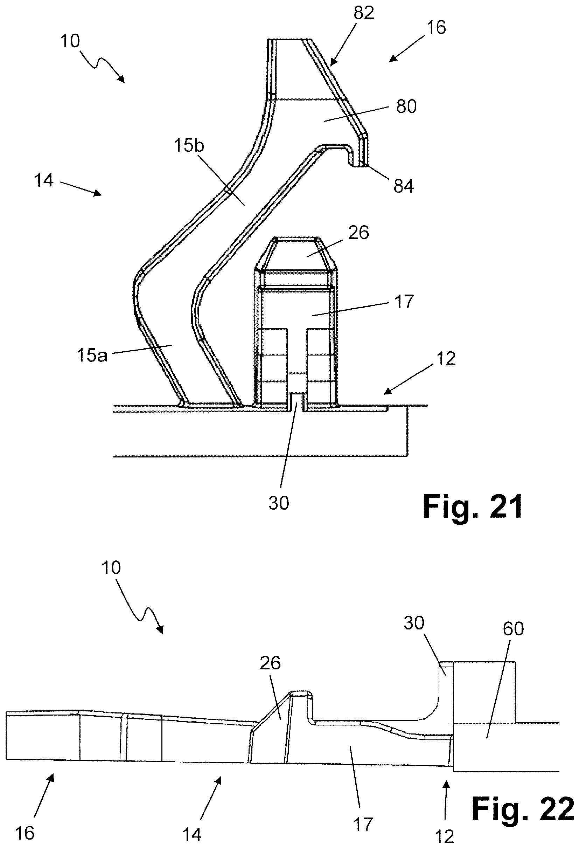

Die erste bis sechste Ausführungsform, die in den Fig. 1 bis 20 gezeigt sind, stellen Schnapphaken und Anordnungen dar, welche zum Verständnis der beanspruchten, siebten Ausführungsform (Fig. 21 bis 26) dienen. Die erste bis sechste Ausführungsform fallen nicht unter den Wortlaut der Ansprüche und stellen lediglich alternative, nicht von den Ansprüchen umfasste Ausführungsformen dar.

Fig. 1 zeigt eine Draufsicht auf einen Schnapphaken 10 einer ersten Ausführungsform. Der Schnapphaken 10 weist einen Basisabschnitt 12, einen flexiblen Abschnitt 14 und einen Verriegelungsabschnitt 16 auf. Der Schnapphaken 10 besteht aus Kunststoff und kann in einem Spritzgussverfahren kostengünstig in hoher Stückzahl hergestellt werden. Der flexible Abschnitt 14 ist im Wesentlichen S-förmig ausgebildet und über einen unteren Abschnitt an dem Basisabschnitt 12 und über einen oberen Abschnitt an dem Verriegelungsabschnitt 16 angeordnet. Die Materialverjüngung in dem flexiblen Abschnitt 14 und die S-förmige Ausbildung mit mehreren Krümmungen stellen einen flexiblen Bereich dar, der federnde Eigenschaften aufweist. Hierüber können der Basisabschnitt 12 und der Verriegelungsabschnitt 16 relativ zueinander bewegt werden. Dabei kann der flexible Abschnitt 14 Energie speichern.

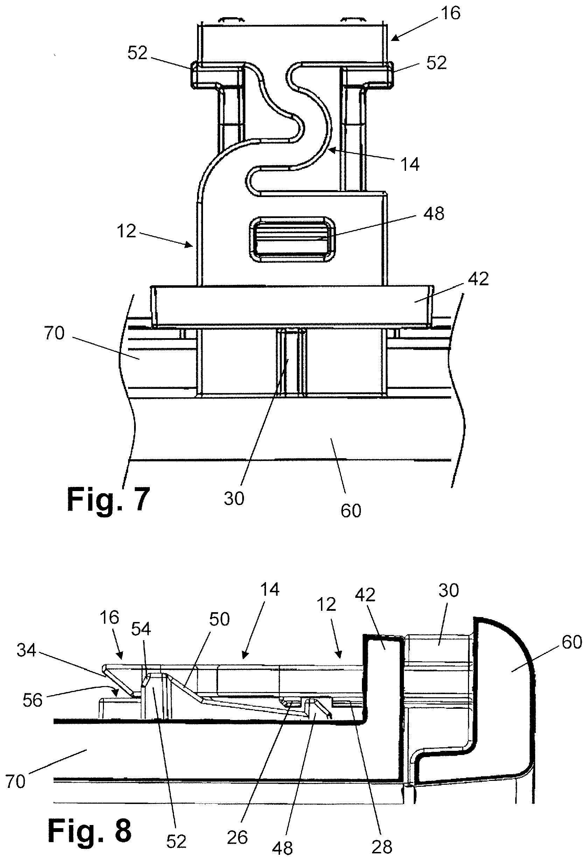

Der Verriegelungsabschnitt 16 weist eine Rastfläche 32 auf, die in einem verriegelten Zustand an einer korrespondierenden Rastfläche 54 eines Rastelements 46 einer Rasteinrichtung 40 anliegt (siehe Fig. 8). Der Basisabschnitt 12 weist eine Öffnung 24 auf. In der Öffnung 24 wird ein oberer Abschnitt der Hakenanordnung 48 aufgenommen, wenn der Schnapphaken 10 sich in einer verriegelten Stellung befindet. Dabei wird der obere Abschnitt der Hakenanordnung 48 nicht vollständig in der Öffnung 24 aufgenommen sondern kann lediglich über die Öffnung 24 mit Blick auf den Schnapphaken 10 sichtbar sein. Hierüber ist eine Sichtkontrolle möglich, ob eine Verrastung erfolgt ist. Beispielsweise kann der obere Bereich der Hakenanordnung 48 eine Färbung aufweisen, sodass ein einfaches Erkennen einer vollständig verriegelten Stellung möglich ist. Hierbei können auch Kamerasysteme verwendet werden, welche die Position eines oberen Bereichs der Hakenanordnung 48 erfassen, wobei eine rechnergestützte Auswertung erfolgt. Hierüber ist eine einfache Qualitätskontrolle und Überprüfung möglich. Aufgrund der Anordnung und Ausbildung des Schnapphakens 10 und einer damit korrespondierenden Rasteinrichtung 40 bietet dies eine zuverlässige Möglichkeit eine ordnungsgemäße Verrastung zusätzlich zu überprüfen.

An der Oberseite 20 des Basisabschnitts 12 ist ein erster Anschlag 30 angeordnet. Der erste Anschlag 30 erstreckt sich orthogonal zu einer Längserstreckung in einer Ebene, in der sich der Basisabschnitt 12, der flexible Abschnitt 14 und der Verriegelungsabschnitt 16 erstrecken (siehe hierzu Fig. 2).

Der erste Anschlag 30 erstreckt sich ausgehend von einer Rückseite 18 des Basisabschnitts 12 um ein bestimmtes Maß nach vorne bzw. in der Darstellung von Fig. 1 nach oben. Der erste Anschlag 30 dient zum Verformen eines Bügels 42, zum Verriegeln des Verriegelungsabschnitts 16 und zum anschließenden Spannen des flexiblen Abschnitts 14, wodurch ein Spiel in einer verriegelten Stellung ausgeschlossen wird.

Fig. 2 zeigt eine Seitenansicht des Schnapphakens 10 von Fig. 1. Der Verriegelungsabschnitt 16 weist einen schrägen Bereich 34 auf. Der schräge Bereich 34 dient zum einfachen Einbringen des Schnapphakens 10 in eine Rasteinrichtung 40. Dabei kann der Verriegelungsabschnitt 16 über den schrägen Bereich 34 entlang einer Rampe 50 eines Rastelements 46 entlang geführt werden und wird dabei angehoben. Nach dem Überfahren der Rampe und eines anschließenden Rastabschnitts 52 liegt der Verriegelungsabschnitt 16 mit seiner Rastfläche 32 an einer korrespondierenden Rastfläche 54 des Rastabschnitts 52 an.

An der Unterseite 22 weist der Schnapphaken 10 im Basisabschnitt 12 einen zweiten Anschlag 28 auf, der eine größere Länge aufweist als der erste Anschlag 30. Der zweite Anschlag 28 weist eine geringere Höhe auf als der erste Anschlag 30. Der zweite Anschlag 28 dient beim Einbringen des Schnapphakens 10 in eine Rasteinrichtung 40 zur Begrenzung der Eindringtiefe des Schnapphakens 10 und zur Begrenzung des Verformens eines Bügels 42 über den ersten Anschlag 30. Hierzu stößt der zweite Anschlag 28 an einer Hakenanordnung 48 an und verhindert dabei ein weiteres Verlagern des Schnapphakens 10. Dabei wird ebenfalls eine weitere Verlagerung des ersten Anschlags 30 verhindert. Dies begrenzt die maximale Auslenkung des Bügels 42.

An den zweiten Anschlag 28 schließt sich eine Lücke an, in deren Abschnitt sich die Öffnung 24 befindet. Nach der Lücke ist als gedachte Verlängerung des zweiten Anschlags 28 ein Haken 26 angeordnet. Der Haken 26 dient als Überlastschutz im verriegelten Zustand des Schnapphakens 10.

Der Haken 26 hintergreift dabei eine Hakenordnung 48, wobei die geradlinig verlaufende hintere Fläche des Hakens 26 an einer korrespondierenden geradlinig verlaufenden Fläche der Hakenanordnung 48 anliegt. Hierdurch wird ein Herausziehen des Schnapphakens 10 aus der Rasteinrichtung 40 verhindert. Zudem ist die Hakenanordnung 48 zwischen dem zweiten Anschlag 28 und dem Haken 26 aufgenommen, wodurch der obere Bereich der Hakenanordnung 48 über die Öffnung 24 sichtbar ist, was die oben beschriebene Sichtkontrolle ermöglicht.

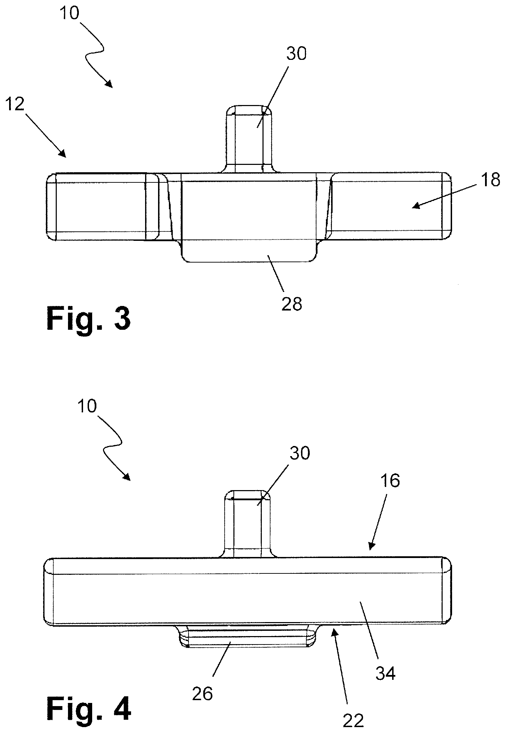

Fig. 3 zeigt eine Rückansicht des Schnapphakens 10 von Fig. 1 mit Blick auf die Rückseite 18 des Basisabschnitts 12. Der erste Anschlag 30 und der zweite Anschlag 28 erstrecken sich orthogonal zur Längsrichtung des Schnapphackens 10, wobei der zweite Anschlag 28 eine größere Bereite aufweist als der erste Anschlag 30.

Fig. 4 zeigt eine Vorderansicht des Schnapphakens 10 von Fig. 1. Der Haken 26 ist ebenfalls so breit wie der zweite Anschlag 28 und weist an seinem vorderen Abschnitt eine Schräge auf, die ein Überfahren der Hakenanordnung 48 beim Einbringen des Schnapphakens 10 in die Rasteinrichtung 40 erleichtert. Nach dem Überfahren der Hakenanordnung 48 ist der Schnapphaken 10 über den Haken 26 gesichert und eine Beschädigung des flexiblen Abschnitts 14 wird dadurch ausgeschlossen.

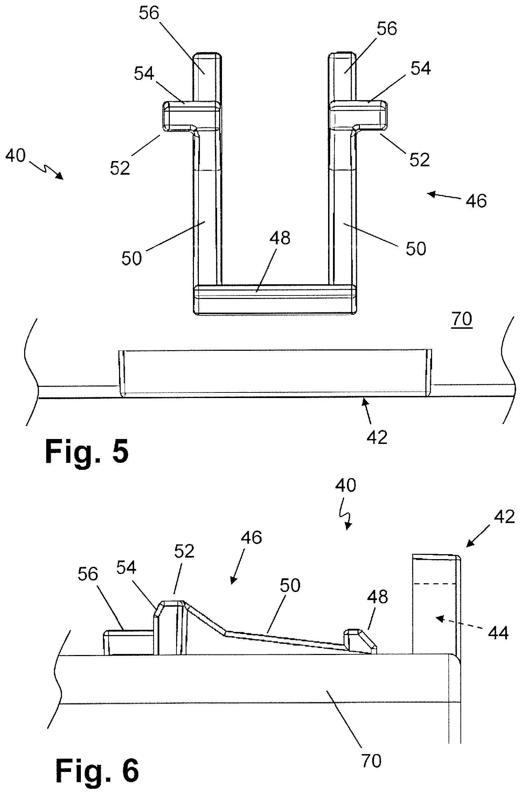

Fig. 5 zeigt eine Draufsicht auf eine Rasteinrichtung 40, bestehend aus einem Bügel 42 und einem Rastelement 46. Die Rasteinrichtung 40 ist Bestandteil einer zweiten Komponente 70. Die zweite Komponente 70 kann eine Vielzahl von derartigen Rasteinrichtungen 40 aufweisen. Beispielsweise ist die zweite Komponente 70 ein Gehäuse eines Luftausströmers für ein Fahrzeug.

Die Rasteinrichtung 40 sowie das Gehäuse des Luftausströmers bestehen aus Kunststoff und können in einem Spritzgussprozess einfach und kostengünstig hergestellt werden. Das Rastelement 46 weist die Hakenanordnung 48 auf, die sich über eine bestimmte Breite erstreckt. Von der Hakenanordnung 48 erstrecken sich zwei Rampen 50, die in einem Rastabschnitt 52 enden. Der Rastabschnitt 52 weist an seiner Rückseite eine Rastfläche 54 mit einer Schräge und einer darunter befindliche Rastfläche auf. An der Rastfläche 54 erstrecken sich weiter Auflageflächen 56, auf welchen der Verriegelungsabschnitt 16 des Schnapphakens 10 im verriegelten Zustand aufliegt.

Fig. 6 zeigt eine Seitenansicht der Rasteinrichtung 40 von Fig. 5. Der Bügel 42 weist eine Öffnung 44 auf, die eine definierte Höhe aufweist. Insbesondere ist die Höhe so gewählt, dass im Zusammenspiel mit den Abmaßen des Rastelements 46, insbesondere der Höhe des Rastabschnitt 52 und der Ausbildung des Schnapphakens 10 eine sichere Verrastung erreicht wird.

In Fig. 6 ist die Anordnung der Hakenanordnung 48 sowie deren Ausbildung und die anschließende Rampe und deren Anbindung an den Rastabschnitt 52 mit seinen Rastflächen 54 und der geradlinigen darunterliegenden Rastfläche sowie der Auflagefläche 56 dargestellt.

Fig. 7 zeigt eine Draufsicht zweier über einen Schnapphaken 10 gemäß der Ausführung von Fig. 1 und eine Rasteinrichtung 40 gemäß der Ausführung von Fig. 5 verrasteter Komponenten 60 und 70. Fig. 8 zeigt eine Seitenansicht der zwei miteinander verrasteten Komponenten 60 und 70 von Fig. 7.

Im verrasteten Zustand hintergreift der Verriegelungsabschnitt 16 des Schnapphakens 10 den Rastabschnitt 52. Insbesondere liegt die Rastfläche 32 des Verriegelungsabschnitts 16 an der geradlinig und parallel zur Rastfläche 32 verlaufende Rastfläche des Rastabschnitts 52 an. Die schräge Rastfläche 54 erleichtert ein Hintergreifen des Verriegelungsabschnitts 16, nachdem dieser um eine bestimmte weite in die Rasteinrichtung 40 eingeschoben wurde.

Zudem hintergreift der Haken 26 die Hakenanordnung 48, wobei sich die beiden geradlinig und parallel zueinander verlaufenden Flächen des Hakens 26 und der Hakenanordnung 48 beabstandet zueinander liegen.

Zur Verbindung der ersten Komponente 60, die beispielsweise eine Blende eines Luftausströmers ist, mit der zweiten Komponente 70, beispielsweise das Gehäuse des Luftausströmers, wird der Schnapphaken 10 zuerst durch den Bügel 42 geschoben. Hierbei durchdringt der Verriegelungsabschnitt 16 die Öffnung 44. Anschließend gleitet der Verriegelungsabschnitt 16 über den Bereich 34 über die Hakenanordnung 48 und wird weiter hineingeschoben, bis der schräge Bereich 34 in Anlage mit der Rampe 50 kommt. Anschließend wird der Schnapphaken 10 weiter eingeschoben, wobei eine gewisse Auslenkung des Verriegelungsabschnitts 16 nach oben aufgrund der Rampe 50 erfolgt. Zudem gelangt der erste Anschlag 30 in Anlage mit dem Bügel 42. Der Bügel 42 wird dabei bei einer weiteren Kraftbeaufschlagung über die erste Komponente 60 verformt, wobei ein Verschwenken nach links erfolgt. Hierdurch wird erreicht, dass der Verriegelungsabschnitt 16 den Rastabschnitt 52 überfährt und die hintere Rastfläche 32 des Verriegelungsabschnitts 16 in Anlage mit der Rastfläche 54 kommt. Über die abfallende schräge Rastfläche 54 gleitet der Verriegelungsabschnitt 16 nach unten, bis die Rastfläche 32 an der parallel dazu verlaufenden hinteren Rastfläche des Rastabschnitts 52 unterhalb der schrägen Rastfläche 54 in Anlage kommt. Der untere Abschnitt des Verriegelungsabschnitts 16 liegt dann auf den Auflageflächen 56 auf.

Das Einbringen des Schnapphakens 10 wird durch den zweiten Anschlag 28 begrenzt, wobei über den zweiten Anschlag 28 auch die Verformung des Bügels 42 durch ein Verkippen nach links beschränkt wird. Nach einem bestimmten Verschwenken des Bügels 42 liegt der vordere Abschnitt des zweiten Anschlags 28 an der Hakenanordnung 48 an. Ein weiteres Verfahren wird dadurch verhindert. In diesem Zustand ist jedoch der Verriegelungsabschnitt 16 bereits soweit verlagert worden, dass dieser den Rastabschnitt 52 des Rastelements 46 hintergreift. Anschließend wird keine Kraft mehr über die erste Komponente 60 aufgebracht und der zweite Bügel 42 federt zurück und nimmt seine ursprüngliche Position wieder ein. Dabei drückt der Bügel 42 über den ersten Anschlag 30 den Basisabschnitt 12 in die der Einschubrichtung entgegengesetzte Richtung. Da der Verriegelungsabschnitt 16 über seine Rastfläche 32 an der korrespondierenden Rastfläche des Rastabschnitts 52 gehalten ist, wird der flexible Abschnitt 14 gespannt. Aufgrund der Spannung des flexiblen Abschnitts 14 ist dieser bestrebt, den Verbindungsabschnitt 16 und den Basisabschnitt 12 aufeinander zu zubewegen. Hierdurch wird ein Spiel in der Verrastung ausgeschlossen. Zudem können sich die weiteren Komponenten, Verriegelungsabschnitt 16 und Basisabschnitt 12 nicht weiter verlagern, da der Verriegelungsabschnitt 16 über den Rastabschnitt 52 gehalten wird und eine Verlagerung des Basisabschnitts 12 über den ersten Anschlag 30 verhindert wird.

Zudem wird ein Überlastschutz bereitgestellt, um den flexiblen Abschnitt 14 vor einer Beschädigung zu schützen. Der Überlastschutz stellt zu dem eine Abzugssicherung bereit. Wird versucht die erste Komponente 60 von der zweiten Komponente 70 zu entfernen, wird ein Zug auf den Schnapphaken 10 aufgebracht. Dabei wird der flexible Abschnitt 14 weiter gespannt. Nach einem kurzen Weg des Basisabschnitts 12 und einem weiteren Spannen des flexiblen Abschnitts 14 liegt die orthogonal zur Längserstreckung des Schnapphakens 10 verlaufende Fläche des Hakens 26 an der parallel dazu verlaufenden Fläche der Hakenanordnung 48 an. Eine weitere Verlagerung des Basisabschnitts 12 wird dadurch verhindert. Dabei wird ebenfalls verhindert, dass der flexible Abschnitt 14 weitergespannt wird, was zu einer Zerstörung dessen führen könnte. Es ist dann nicht mehr möglich die erste Komponente 60 von der zweiten Komponente 70 zu entfernen. Hierzu müsste der Verriegelungsabschnitt 16 angehoben werden. Da aber keine Missbrauchskraft auf den Verriegelungsabschnitt 16 wirkt, der lediglich aufgrund der Spannung über den flexiblen Abschnitt 14 auf Zug beansprucht wird, erfolgt keine Verlagerung des Verriegelungsabschnitts 16. Da im verriegelten Zustand des Schnapphakens 10 die Oberseite 20 des Basisabschnitts 12 im Wesentlichen direkt an der gegenüberliegenden Wand der Öffnung 44 anliegt, ist auch ein Überfahren der Hakenanordnung 48 durch den Haken 26 nicht möglich. Daher wird ein Abziehen der ersten Vorrichtung 60 bzw. des Schnapphakens 10 von der Rasteinrichtung 40 verhindert. Auf den Schnapphaken 10 wirkende Kräfte werden über den Überlastschutz, gebildet durch den Haken 26 und die Hakenanordnung 48, aufgefangen. Es wirken daher keine Abzugskräfte am Verriegelungsabschnitt 16. Aufgrund des Spannens des flexiblen Abschnitts 14 kann die auf den Verriegelungsabschnitt 16 wirkende Kraft etwas größer als in einer regulären Verriegelungsstellung sein, diese Kraft ist jedoch deutlich geringer als die Abzugskraft, die über die erste Komponente 60 aufgebracht wird.

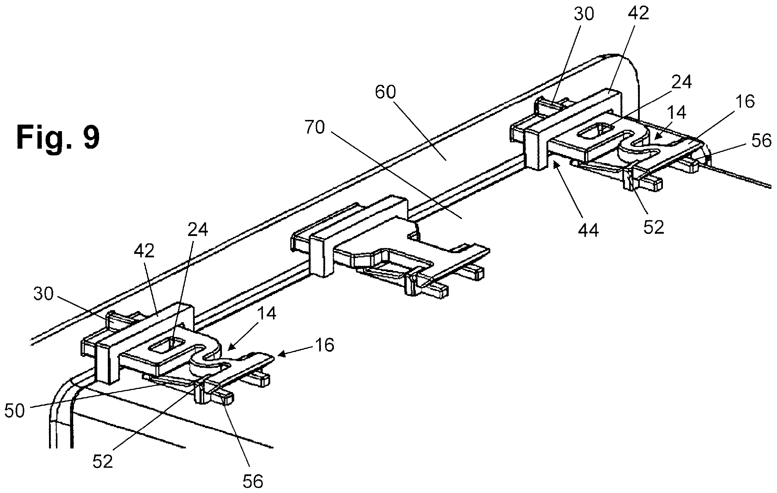

Fig. 9 zeigt eine perspektivische Darstellung zweier Komponenten 60 und 70 die über Schnapphaken 10 gemäß der Ausführung von Fig. 1 und Rasteinrichtung 40 gemäß der Ausführung von Fig. 5 miteinander verrastet sind.

Die erste Komponente 60 ist eine Blende eines Luftausströmers und die zweite Komponente 70 ist das Gehäuse des Luftausströmers. Die erste Komponente 60 ist über mindestens die beiden Schnapphaken 10 und die Hakenanordnung 40 der zweiten Komponente 70 mit dieser verbunden. Zusätzlich ist eine weitere Hakenanordnung dargestellt, wobei keine Abzugssicherung mit einem Überlastschutz und kein Spielausgleich vorgesehen sind. Lediglich die beiden äußeren Verrastungen weisen durch den flexiblen Abschnitt 14 der Schnapphaken 10 eine Abzugssicherung und eine sichere, robuste Lagerung ohne Spiel auf. Die beiden äußeren dargestellten Verrastungen entsprechen den in den Fig. 7 und 8 gezeigten Ausführungen. Daher wird auf die hierzu gemachten Erläuterungen verwiesen.

Die Schnapphaken 10 können bei der Montage in den Bügel 42 eingeführt werden, bis der erste Anschlag 30 am Bügel 42 in Kontakt kommt. Der Bügel 42 muss nun unter Aufbringung einer Montagekraft verformt werden, um das Einrasten des Verriegelungsabschnitts 16 über dessen Rastfläche 32 an der korrespondierenden Rastfläche des Rastabschnitts 52 zu gewährleisten. Die Rastfläche 32 und die korrespondierende Rastfläche des Rastabschnitts 52 sind auf Kollision ausgelegt, um die Fertigungstoleranzen zu kompensieren, bei einer Toleranzkette von beispielsweise +/- 0,2 mm müssen die Rastfläche 32 und die Rastfläche des Rastabschnitts 52 um 0,2 mm auf Überdrückung ausgelegt sein. Somit muss auch der Bügel 42 um eben diese 0,2 mm zuzüglich einer eventuell erforderlichen Sicherheit nach hinten in Richtung des Rastelements 46 gebogen werden, um die Montage sicherzustellen. Bei Aufhebung der Montagekraft wird durch die Steifigkeit des Bügels 42 die zweite Komponente 70 in ihre Designstellung zurückgedrückt, wobei der flexible Abschnitt 14 des Schnapphakens 10 gedehnt wird. Der Schnapphaken 10 mit dem flexiblen Abschnitt 14 weist einen Überlastschutz auf, um im Missbrauchsfall den flexiblen Abschnitt 14 zu entlasten und vor einer Zerstörung zu schützen.

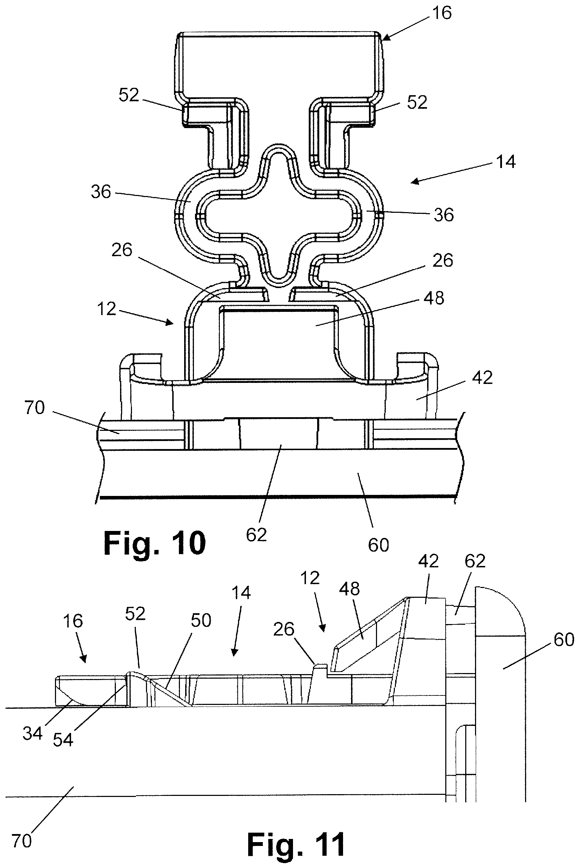

Fig. 10 zeigt eine Draufsicht zweier über einen Schnapphaken 10 und eine Rasteinrichtung 40 einer zweiten Ausführungsform verrasteter Komponenten 60 und 70. Der Unterschied des Schnapphakens 10 der zweiten Ausführungsform besteht gegenüber der ersten Ausführungsform darin, dass der flexible Abschnitt 14 zwei Federarme 36 aufweist. Die Federarme 36 sind so ausgebildet, dass eine Verlagerung des Verriegelungsabschnitts 16 relativ zu dem Basisabschnitt 12 möglich ist. Der flexible Abschnitt 14 neigt weniger zu Verzug, da er symmetrisch aufgebaut ist. Ebenso ist der flexible Abschnitt 14 hierdurch robuster ausgeführt. Ein weiterer Unterschied besteht darin, dass der Schnapphaken 10 der zweiten Ausführungsform keinen ersten Anschlag 30 und keinen zweiten Anschlag 28 aufweist. Stattdessen ist an dem Bügel 42 ein Anschlag 62 angeordnet, der ebenfalls zum vorstehend beschriebenen Überdrücken dient. Die Anordnung des Anschlags 62 an der zweiten Komponente 70 vermeidet Einfallstellen an der ersten Komponente 60.

Fig. 11 zeigt eine Seitenansicht der zwei miteinander verrasteten Komponenten 60 und 70 von Fig. 10. Der Überlastschutz wird durch eine Hakenanordnung 48 gebildet, die an dem Bügel 42 angebracht ist. Die Hakenanordnung 48 weist einen gefederten Abschnitt auf, der nach unten ragt. Beim Einbringen des Schnapphakens 10 gleitet der Haken 26 unter dem gefederten Abschnitt entlang und bewirkt ein Anheben dessen. Hierzu weist der Haken 26 an seiner Vorderseite eine Schräge auf. Nach dem Überfahren der Hakenanordnung 48 durch den Haken 26 bewegt sich der gefederte Abschnitt der Hakenanordnung 48 wieder nach unten. Der Haken 26 hintergreift daher die Hakenanordnung 48. In einem verriegelten Zustand besteht ein Abstand zwischen dem Haken 26 und dem gefederten Abschnitt der Hakenanordnung 48. Wird die erste Komponente 60 von der zweiten Komponente 70 wegbewegt, erfolgt ein leichtes Spannen des flexiblen Abschnitts 14. Dabei wird der Haken 26 gegen die Hakenanordnung 48 bewegt und liegt dann an dieser an. Durch die Ausbildung des Hakens 26 und der Hakenanordnung 48 ist ein weiteres Spannen des flexiblen Abschnitts 14 und ein Herausziehen des Schnapphakens 10 nicht möglich. Der Überlastschutz der zweiten Ausführungsform ist robuster ausgeführt als die erste Ausführungsform und kann zudem werkzeugtechnisch einfach hergestellt werden. Die Bindenaht an der Oberseite des Bügels 42 ist massiv ausgeführt und somit weniger bruchgefährdet.

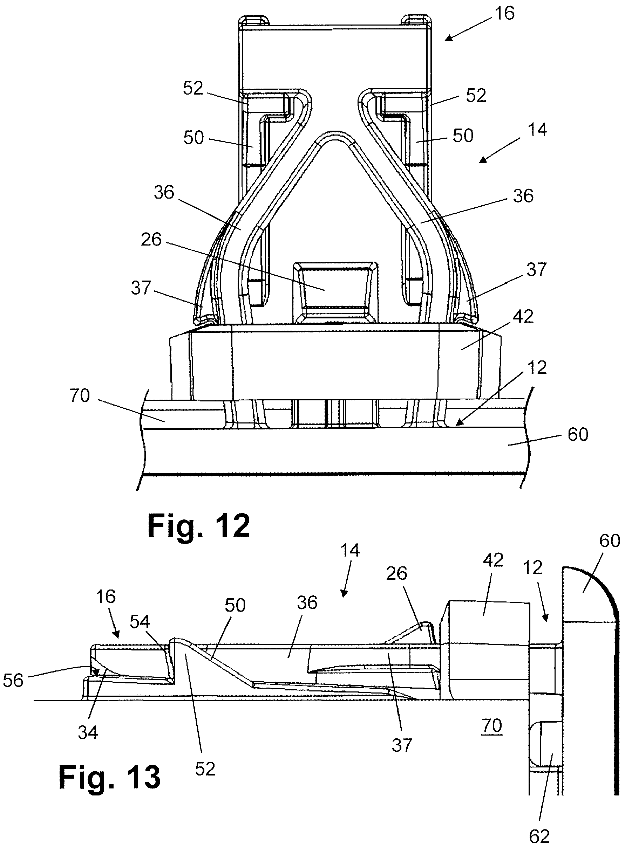

Fig. 12 zeigt eine Draufsicht zweier über einen Schnapphaken 10 und eine Rasteinrichtung 40 einer dritten Ausführungsform verrasteter Komponenten 60 und 70. Der Schnapphaken 10 weist zwei Federarme 36 auf. Die beiden Federarme 36 sind direkt an der ersten Komponente 60 angeordnet. Die Rückwand der ersten Komponente 60 bildet damit den Basisabschnitt 12. Der flexible Abschnitt 14 ist bauchig ausgebildet, wobei die Federarme 36 ausgehend vom Basisabschnitt 12 leicht nach außen, d. h. einander abgewandt, gekrümmt sind und anschließend wieder zusammenlaufen. Die vorderen Enden der Federarme 36 sind mit dem Verriegelungsabschnitt 16 verbunden. Die Federarme 36 weisen zudem zweite Verriegelungsabschnitte 37 auf, die an den einander abgewandten Außenseiten angeordnet sind. Die zweiten Verriegelungsabschnitte 37 verbreitern den flexiblen Abschnitt 14 in Einschubrichtung und weisen Hinterschnitte auf.

Der Schnapphaken 10 wird bei der Montage seitlich gestaucht, wobei die Federarme 36 aufeinander zu bewegt werden. Dies führt zu einer Längung des Schnapphakens 10. Die Rastflächen 32 des Schnapphakens 10 werden somit über die Rastflächen an den Rastabschnitten 52 gelängt. Nachdem die zwei Verriegelungsabschnitte 37 den Bügel 42 verlassen haben, schnappen diese nach außen zurück, was eine Verkürzung auf die Ausgangslage zur Folge hat. Die Verrastung ist somit auf Zug (spielfrei) ausgelegt.

Der Schnapphaken 10 muss bei der Montage zudem nicht überdrückt werden, wie dies für die erste und zweite Ausführungsform notwendig ist. Die Position ist damit nicht abhängig von zwei federnden Elementen (erste Ausführungsform und zweite Ausführungsform: Abschnitt 14 und Bügel 42) und somit genauer. Bei der ersten und bei der zweiten Ausführungsform ist der Bügel 42 gegenüber dem flexiblen Abschnitt 14 härter gefedert.

Bei der dritten Ausführungsform weist der Schnapphaken 10 ferner einen Hakenarm auf, an dem der Haken 26 angeordnet ist. Der Haken 26 ist über den Hakenarm direkt am Basisabschnitt 12 angebracht und nicht mit dem flexiblen Abschnitt 14 verbunden.

Fig. 13 zeigt eine Seitenansicht der zwei miteinander verrasteten Komponenten 60 und 70 von Fig. 12. Die zweiten Verrieglungsabschnitte 37 erstrecken sich nicht über die komplette Höhe der Federarme 36. Zudem ist der Haken 26 beim Einschieben der Schnapphakens 10 über den Federarm gefedert, wodurch beim Einschieben des Schnapphakens 10 eine Verlagerung des Hakens 26 nach unten möglich ist. Im verrasteten Zustand besteht ein geringer Abstand zwischen dem Haken 26 und dem Bügel 42. Wird ein Zug auf die erste Komponente 60 aufgebracht, so wird der flexible Abschnitt 14 um ein geringes Maß weiter gespannt. Anschließend liegt der Haken 26 mit einer Verriegelungsfläche an dem Bügel 42 an und verhindert ein weiteres Abziehen des Schnapphakens 10. Der Überlastschutz verstärkt die beiden Federarme 37 massiv bei einer Überlastung auf Zug. Die Ausbildung der Verriegelungsabschnitte 37 sorgt dafür, dass der Schnapphaken 10 während der Montage möglichst lange innerhalb des Bügels 42 bleibt ohne im verbauten Zustand auf Zug zu sein.

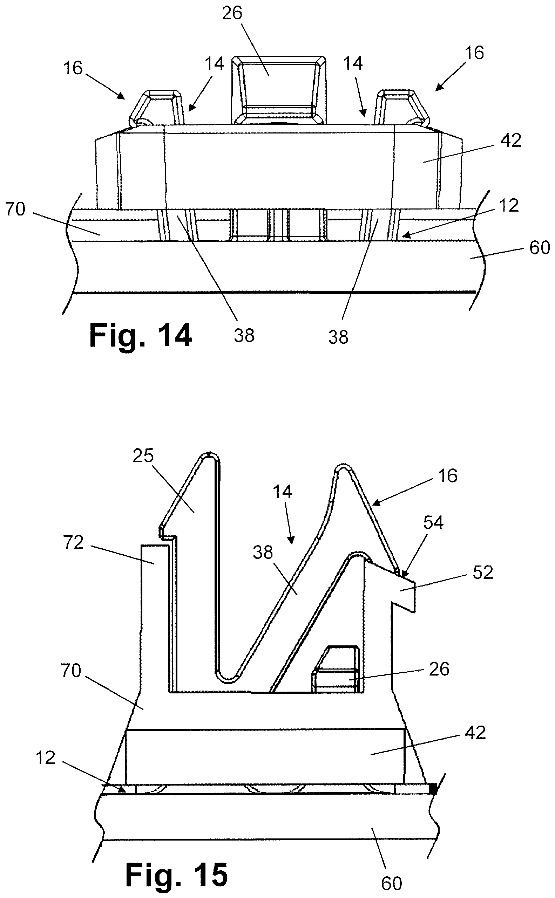

Fig. 14 zeigt eine Draufsicht zweier über einen Schnapphaken 10 und eine Rasteinrichtung 40 einer vierten Ausführungsform verrasteter Komponenten 60 und 70. Bei der vierten Ausführungsform ist der Schnapphaken 10 verkürzt ausgebildet. Der Schnapphaken 10 weist hierzu im flexiblen Abschnitt 14 zwei Rastarme 38 auf, die schräg zu dem Basisabschnitt 12 angeordnet sind. Beim Einbringen des Schnapphakens 10 werden die beiden Rastarme 38 aufeinander zubewegt. Ein Einführen ist über die schrägen Abschnitte am Verriegelungsabschnitt 16 erleichtert. Solange die flexiblen Abschnitte 14 bzw. die Rastarme 38 sich innerhalb des Bügels 42 befinden, erfahren diese eine Längung. Nachdem die Verrieglungsabschnitte 16 aus dem Bügel 42 herausgeführt sind, schnappen diese nach außen und die Rastflächen der Verriegelungsabschnitte 16 liegen an entsprechenden Rastflächen an den Seitenwänden des Bügels 42 an.

Wird eine Kraft zum Abziehen der ersten Komponente 60 aufgebracht, so können die beiden Rastarme 38 geringfügig aufeinander zubewegt werden. Jedoch wird über den Haken 26, der über einen Hakenarm direkt am Basisabschnitt 12 angeordnet ist, eine robuste Abzugssicherung bereitgestellt, welche den Bügel 42 hintergreift.

Fig. 15 zeigt eine Draufsicht zweier über einen Schnapphaken 10 und eine Rasteinrichtung 40 einer fünften Ausführungsform verrasteter Komponenten 60 und 70. Der Schnapphaken 10 der fünften Ausführungsform weist einen Haken 25 auf, der über einen Hakenarm sich orthogonal zum Basisabschnitt 12 erstreckt. Der flexible Abschnitt 14 wird durch einen Rastarm 38 gebildet, an dessen vorderem Ende der Verriegelungsabschnitte 16 angeordnet ist. Der Rastarm 38 ist ebenfalls am Basisabschnitt 12 angeordnet. Beim Einbringen des Schnapphakens 10 in eine Rasteinrichtung 40 wird aufgrund der geradlinigen Ausbildung des Hakenarms mit dem Haken 25 der Rastarm 38 gestaucht. Dies führt zu einer Längung, wobei der Verriegelungsabschnitt 16 in Richtung des Hakens 25 gedrückt wird. Die Rasteinrichtung weist neben dem Bügel 42 eine Wand 72 und eine gegenüberliegende Wand mit dem Rastabschnitt 52 auf. Die Wand 72 erstreckt sich weiter in Einschubrichtung des Schnapphakens 10 nach vorne als die gegenüberliegende Wand mit dem Rastabschnitt 52. Beim Einschieben des Schnapphakens 10 gleitet der Haken 25 entlang der Wand 72. Der Verriegelungsabschnitt 16 gleitet entlang der gegenüberliegenden Wand und schnappt nach dem Überfahren der gegenüberliegenden Wand nach außen. Die Rastfläche 32 des Verriegelungsabschnitts 16 (in Fig. 15 nicht bezeichnet) kommt dann in Anlage mit der Rastfläche 54 des Rastabschnitts 52. Der Verriegelungsabschnitt 16 hintergreift somit den Rastabschnitt 52 und stellt eine spielfreie Verrastung sicher. Hierbei ist der flexible Abschnitt 14 leicht gegenüber einer nicht verrasteten Ausgangsstellung gespannt. Aufgrund der schrägen Ausbildung des Rastabschnitts 52 mit der Rastfläche 54 sowie des Verriegelungsabschnitts 16 wird ein Abziehen des Schnapphakens 10 verhindert. Der Schnapphaken 10 weist zusätzlich einen Hakenarm mit einem Haken 26 auf, der ebenfalls am Basisabschnitt 12 angeordnet ist. Gegenüber dem Haken 25 ist der Haken 26 über seinen Hakenarm beim Einschieben des Schnapphakens 10 federnd. Hierbei kann der Haken 26 nach unten gedrückt werden. In der verriegelten Stellung stellt der Haken 26 damit eine Abzugssicherung bereit. Der Haken 25 unterstützt die Abzugssicherung. Beide Rastflächen der Haken 25 und 26 liegen im verrasteten Zustand beabstandet zu den korrespondierenden Flächen des Bügels 42 bzw. der Wand 72.

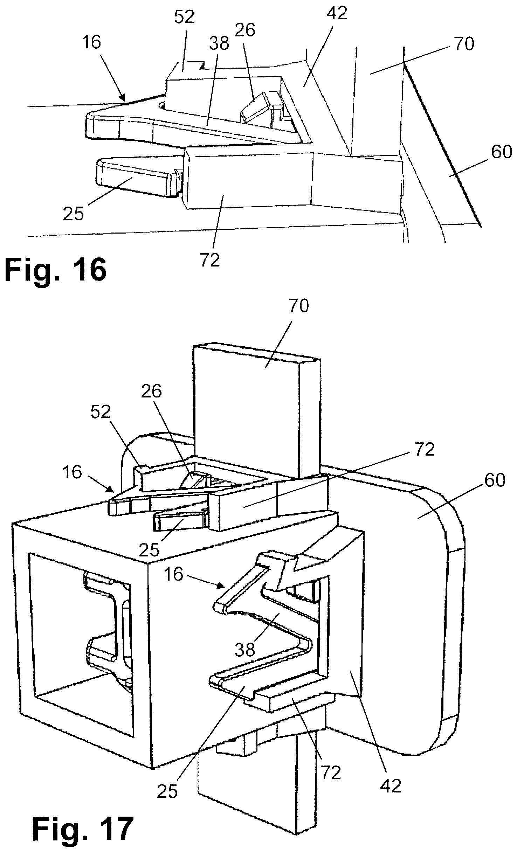

Fig. 16 zeigt eine perspektivische Darstellung der beiden miteinander verrasteten Komponenten 60 und 70 von Fig. 15.

Schließlich zeigt Fig. 17 eine perspektivische Darstellung zweier Komponenten 60 und 70, die über Schnapphaken 10 und Rasteinrichtungen 40 gemäß der Ausführung von Fig. 15 miteinander verrastet sind. Über jeweils zwei Paare gegenüberliegender Schnapphaken 10 kann eine spielfreie Verrastung mit einem sehr sicheren Halt bereitgestellt werden. Zusätzlich zeigen die Fig. 16 und 17, wie der Haken 26 als Abzugssicherung dient. Ferner wird die Abzugssicherung über den Haken 25 unterstützt.

Der Rastarm 38 erfährt im Vergleich zu den vorstehenden Varianten der ersten bis vierten Ausführungsform geometrisch bedingt die größte Längung, was damit ebenso den größten Toleranzausgleich ermöglicht. Gleichzeitig weist der Rastarm 38 die größte nominelle Überdrückung an der Rastfläche auf. Er ist bei allen auftretenden Toleranzen immer in Kontakt mit der gegenüberliegenden Rastfläche 54.

Der Hakenarm mit dem Haken 25 dient als Gegenlager und hat an dessen Ende ebenfalls eine Rastfläche, die jedoch nicht auf Überlappung sondern mit Spiel ausgelegt ist. Sie dient dem Abfangen von großen Abzugskräften analog dem Haken 26. Der Haken 26 mit dem daran angeordneten Hakenarm dient ebenfalls mit einer freigestellten Rastfläche als Überlastschutz. Durch die abgewinkelte Rastfläche 32 ist es dem Schnapphaken 10 nicht möglich bei Zug aus der Rastposition zu rutschen. Der Schnapphaken 10 ist selbstlängend und muss daher nicht an einem flexiblen Gegenstück (beispielsweise Bügel 42 von Fig. 1) überdrückt werden. Dies gewährleistet eine bestmögliche Kontrolle der Positionen. Die Kraft, welche für die Montage aufgebracht werden muss, ist geringer als bei den ersten vier Ausführungen.

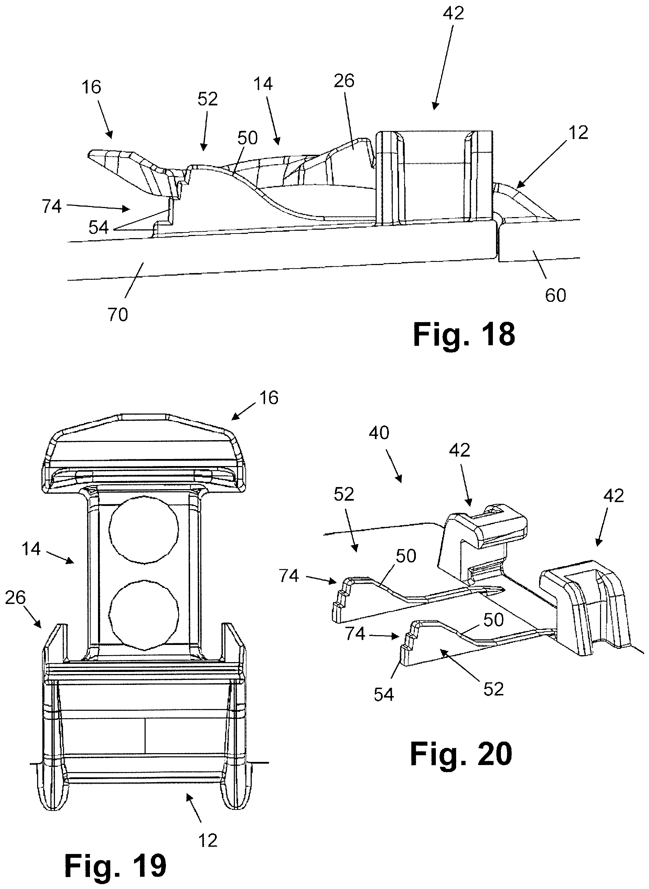

Fig. 18 zeigt eine Seitenansicht zweier über einen Schnapphaken 10 und eine Rasteinrichtung 40 einer sechsten Ausführungsform verrasteter Komponenten 60 und 70. In der sechsten Ausführungsform ist der flexible Abschnitt 14 durch einen Bügel gebildet, der leicht nach oben (in Bezug auf die Darstellung von Fig. 18) gebogen ist. Zusätzlich ist an dem flexiblen Abschnitt 14 ein abstehender Haken 26 angeordnet, der auch als Überlastschutz dient.

Die Rastabschnitte 52 der Rasteinrichtung 40 weisen jeweils eine Rampe 50 auf, die kurvenförmig ausgebildet ist. Dies bewirkt, dass die aufzuwendende Kraft während des gesamten Fügevorgangs der Teile gleichmäßiger, ohne finale Spannungsspitze, wirkt. Diese kurvenförmige Ausbildung ist grundsätzlich auch bei den vorher beschriebenen Varianten möglich. Die Rasteinrichtungen 52 weisen zudem Stufen 74 auf. Eine solche stufenförmige Ausführung der Rastflächen 54 an den Rastabschnitten 52 kann auch bei den vorhergehenden Varianten, insbesondere bei der ersten, zweiten und dritten Ausführungsform in weiteren Abwandlungen vorgesehen sein.

Alle Stufen 74 können als Rastfläche 54 dienen, an welcher eine entsprechende Rastfläche des Verriegelungsabschnitts 16 im verrasteten Zustand anliegt. Die Ausbildung der Rastflächen als Stufen 74 dient dazu, bei fertigungsbedingten Toleranzabweichungen in der Rastlänge der Anordnung immer eine gleichwertige Rastsituation auf einer der Stufen zu ermöglichen, so dass die Rastfläche des Verriegelungsabschnitts 16 an einer der korrespondierenden stufenförmigen Rastflächen der Rastabschnitte 52 auf Zug und somit spielfrei ist. Es sind somit ohne Einschränkungen der Federvorspannung wesentlich gröbere Fertigungstoleranzen der Bauteile und Verzicht auf eventuelle Maßabstimmungen realisierbar, als nur bei einer Rastfläche 54. Das System stellt sich automatisch bei der Montage auf die richtige Vorspannung ein, indem sich der Verriegelungsabschnitt 16 bei der Längung des flexiblen Abschnitts 14, je nach Toleranzlage aller an der Rastfunktion beteiligten Längenmaße, abweichend von der mittleren Treppenstufe, die die konstruktive Nominallage des eingebauten Rastabschnitts darstellt, auch auf die kürzere oder längere vorgespannte Rastlage auf der unteren oder oberen Treppenstufe bewegen kann. Grundsätzlich ist diese Verbesserung, die gröbere Fertigungstoleranzen ermöglicht, auch bei den vorher genannten Varianten möglich.

Der flexible Abschnitt 14 wird bei der Montage durch die Bügel 42 nach unten gedrückt. Dadurch erfährt der vordere Verriegelungsabschnitt 16 eine Verschiebung relativ zum Basisabschnitt 12, da der flexible Abschnitt 14 über den Haken 26, welcher ebenfalls als Überlastschutz dient, gestaucht wird.

Nach dem Einbringen des Schnapphakens 10 besteht ein gewisser Abstand zwischen dem Bügel 42 und einer gegenüberliegenden Rückwandfläche des Hakens 26. Wird nun Zug auf die erste Komponente 60 ausgeübt, so bewirkt dies ein geringes Niederdrücken des flexiblen Abschnitts 14, wobei der Verrieglungsabschnitt 16 in sämtlichen Stellungen direkt in Anlage mit der Rastfläche 54 des Rastabschnitts 52 ist. Nach einer definierten Krümmung bzw. Niederdrücken des flexiblen Abschnitts 14 liegt die entsprechende Wandfläche des Hakens 26 an einer Wandfläche des Bügels 42 an, sodass eine weitere Verlagerung über den Haken 26 verhindert wird. Hierdurch wird eine weitere Verformung des flexiblen Bereichs 14 ausgeschlossen und damit eine Beschädigung der Schnappanordnung sowie ein Lösen der Verbindung verhindert.

Fig. 19 zeigt eine Draufsicht auf den Schnapphaken 10 von Fig. 18. Der flexible Abschnitt 14 ist als Bügel ausgebildet, der den Basisabschnitt 12 mit dem Verriegelungsabschnitt 16 verbindet. Ein Spannen des flexiblen Abschnitts 14 erfolgt über ein Niederdrücken des flexiblen Abschnitts 14 wie in Fig. 18 gezeigt.

Fig. 20 zeigt schließlich eine perspektivische Darstellung der Rasteinrichtung von Fig. 18. Bei der Ausführung ist eine Bügeleinrichtung an der Komponente 70 durch zwei gegenüberliegende Bügel 42 gebildet. Über diese wird der breite Haken 26 nach unten und damit der flexible Abschnitt 14 niedergedrückt. Nach dem Überfahren der Haken 42 kann sich der flexible Bereich 14 wieder nach oben verformen, da der Haken 26 die Verformung freigibt.

Fig. 21 zeigt eine Draufsicht eines Schnapphakens 10 einer siebten Ausführungsform. Der Schnapphaken 10 der siebten Ausführungsform weist einen flexiblen Abschnitt 14 mit einem ersten Arm 15a und einem zweiten Arm 15b auf. Der erste Arm 15a ist unter einem Winkel zwischen 50° und 80° zum Basisabschnitt 12 angeordnet. Der zweite Arm 15b ist unter einem Winkel zwischen 60° und 90° zum ersten Arm 15a angeordnet. Am Ende des zweiten Arms 15b, welches dem Verbindungsbereich zum ersten Arm 15a gegenüberliegt, weist der zweite Arm 15b den Verriegelungsabschnitt 16 auf. Der Verriegelungsabschnitt 16 umfasst einen Abschnitt 80 mit einer Schräge 82 und einen in Verlängerung zur Schräge 82 ausgebildeten Haken 84. Der Haken 84 erstreckt sich entgegengesetzt zur Einschubrichtung des Schnapphakens 10. Vom Basisabschnitt 12 erstreckt sich zusätzlich ein dritter Arm 17, der an seinem vorderen Ende einen Haken 26 aufweist. Der Haken 26 dient als Überlastschutz und verhindert bei hohen Abzugskräften auf die Komponenten 60 und 70 eine Zerstörung oder Überbeanspruchung des Schnapphakens 10 bzw. des flexiblen Abschnitts 14 mit dem ersten Arm 15a und dem zweiten Arm 15b. Am Basisabschnitt 12 ist zusätzlich ein erster Anschlag 30 angeordnet.

Fig. 22 zeigt eine Seitenansicht eines Schnapphakens 10 der siebten Ausführungsform. Der Schnapphaken 10 erstreckt sich im Wesentlichen in einer Ebene und wird zur Verriegelung innerhalb der Ebene verschwenkt bzw. ausgelenkt, in welcher die Arme 15a und 15b verlaufen. Hierüber unterscheidet sich der Schnapphaken 10 der siebten Ausführungsform von den Schnapphaken 10 der ersten Ausführungsform, der zweiten Ausführungsform und der dritten Ausführungsform, wobei der Verriegelungsabschnitt 16 angehoben wird. Gleiches gilt für den Schnapphaken 10 der sechsten Ausführungsform, der ebenfalls eine Verlagerung des Verriegelungsabschnitts 16 orthogonal zur Einschubrichtung in der entsprechenden Weise, wie beschreiben, hervorruft.

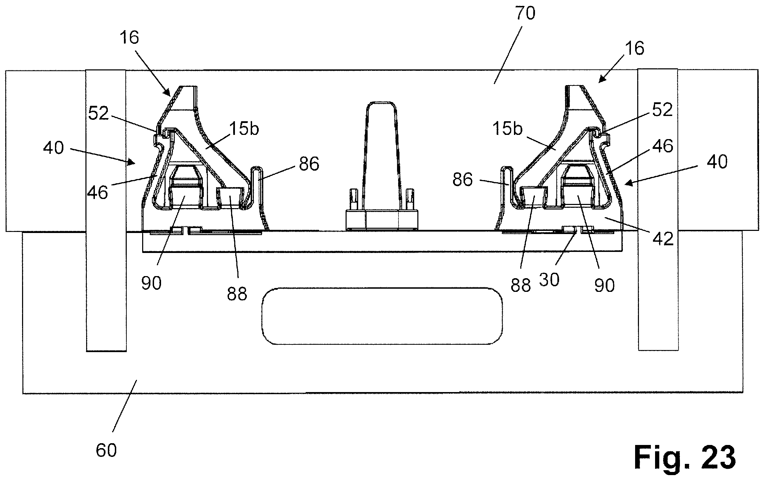

Fig. 23 zeigt eine Draufsicht zweier über Schnapphaken 10 und eine Rasteinrichtung 40 der siebten Ausführungsform verrasteter Komponenten 60 und 70. Die Darstellung umfasst zwei Schnapphaken 10, deren Arme 15a und 15b eine zueinander gespiegelte Ausrichtung aufweisen. Hierüber kann eine noch verbesserte Verriegelung erreicht werden, da die Arme 15a und 15b in zwei Richtungen vorgespannt sind.

Beim Einbringen des Schnapphakens 10 gleitet der Abschnitt 80 des Verriegelungsabschnitts 16 über die Schräge 82 an der Innenseite des Rastelementes 46 entlang. An der gegenüberliegenden Seite im Verbindungsbereich zwischen dem ersten Arm 15a und dem zweiten Arm 15b wird der Verbindungsbereich gegen eine Wand 86 gedrückt. Die Wand 86 erstreckt sich wie das Rastelement 46 seitlich von den Wandabschnitten des Bügels 42. Über die Wand 86 und die Ausbildung des Rastelements 46 sowie des Verriegelungsabschnitts 16 des Schnapphakens 10 erfolgt ein Stauchen bzw. Verschwenken des Schnapphakens 10. Der Drehpunkt des flexiblen Abschnitts 14 befindet sich dabei im Wesentlichen im Verbindungsbereich zwischen dem ersten Arm 15a und dem zweiten Arm 15b. Beim Einbringen des Schnapphakens 10 erfolgt eine Längung in der Art, wobei der Verriegelungsabschnitt 16 einen größeren Abstand zum Basisabschnitt 12 aufweist. Nach dem Überfahren des Rastelements 46 federt der zweite Arm 15b zurück und es kommt zu einem Hintergreifen bzw. einer Verriegelung über den Haken 84, der in Kontakt mit dem Rastabschnitt 52 kommt.

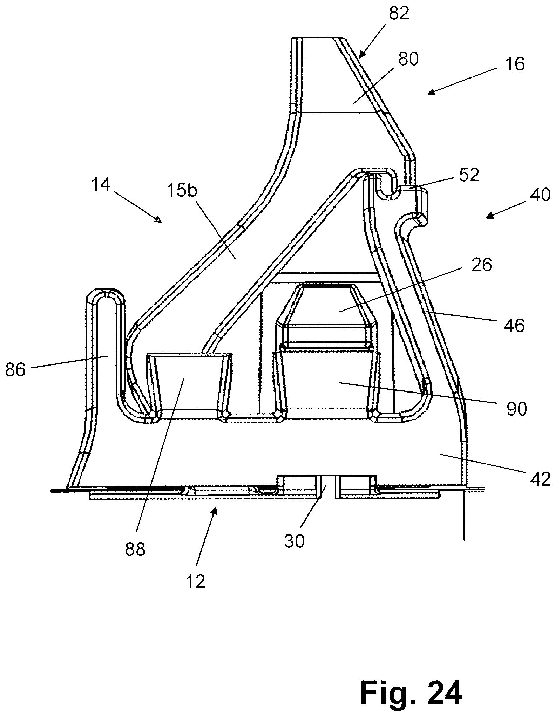

Fig. 24 zeigt eine Draufsicht auf einen Schnapphaken 10 und eine Rasteinrichtung 40 der Darstellung von Fig. 23 in vergrößerter Darstellung. Im verrasteten Zustand ist der Haken 84 vorgespannt und weist beispielsweise eine Überdrückung von 0,3 mm auf. Diese Überdrückung stellt sicher, dass auch bei größeren Fertigungstoleranzen bei der Herstellung, insbesondere bei Kunststoffteilen, eine sichere Verrastung gegeben ist. Hierzu kann der Schnapphaken 10 eine Längung von mindestens 0,8 mm erreichen, welche für die Verriegelung erforderlich ist.

Bei Abzugskräften dreht der Schnapphaken 10 um den ursprünglichen Drehpunkt, wodurch die Richtung der Reaktionskraft entgegen der Zugrichtung ist.

Die abgesetzte Rastfläche des Hakens 84 sorgt für eine eindeutige Rastposition. Zusätzlich kann der Rastabschnitt 52 eine entsprechende Gestalt aufweisen. Wesentlich ist jedoch der hakenähnliche Überstand am Rastelement 46, welcher vom Haken 84 hintergriffen wird.

Die abgesetzte Rastfläche sorgt ferner dazu, dass ein wahrnehmbares Rastgeräusch erzeugt wird, wenn der Schnapphaken 10 in die Rastposition fällt. Zudem wird hierüber ein Schutz gegen ein Ausrasten gegeben.

Der Widerhaken 90 dient in Kombination mit dem Haken 26 am dritten Arm 17 als Überlastschutz. Der Widerhaken 90 ist hierzu am Bügel 42 angeordnet. Bei starken Abzugskräften drückt der Haken 46 mit seiner flach abfallenden Sperrseite gegen den Widerhaken 90 und verriegelt diesen. Ein Abziehen ist daher nicht möglich, wobei eine Beschädigung des flexiblen Abschnitts 14 verhindert wird.

Zusätzlich ist am Bügel 42 ein Halteelement 88 angeordnet. Das Halteelement 88 drückt während der Montage bzw. dem Einbringen des Schnapphakens 10 in die Rasteinrichtung 40 den flexiblen Abschnitt 14 nach unten, wodurch ein Wegfedern nach oben aufgrund von Entformschrägen verhindert wird. Der Schnapphaken 10 der siebten Ausführungsform unterscheidet sich daher deutlich vom Wirkprinzip der Schnapphaken 10 der ersten bis dritten Ausführungsform, welche ein entsprechendes Wegfedern erforderlich machen. Ein Wegfedern würde jedoch bei der siebten Ausführungsform zu Verlusten bei der erforderlichen Längung führen. Das Halteelement 88 stellt sicher, dass die Position des flexiblen Abschnitts 14, gegenüber einer Bodenfläche, beibehalten wird.

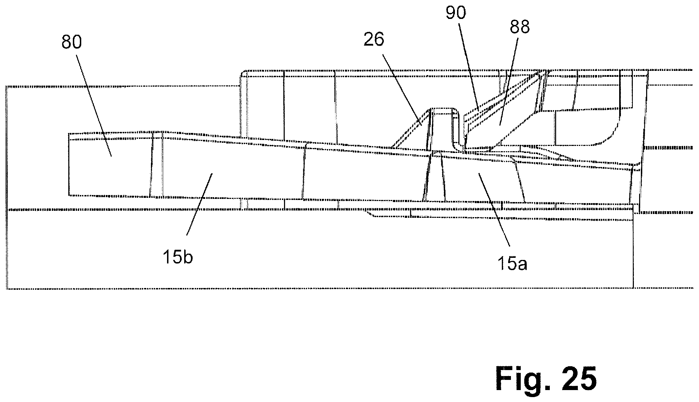

Die Funktion des Halteelements 88 ist in Fig. 25 ersichtlich, welche eine Seitenansicht auf die Darstellung von Fig. 24 zeigt. Zudem ist der Widerhaken 90 dargestellt, der nach dem Einbringen des Schnapphakens 10 in die Rasteinrichtung 40 einen geringen Zug zulässt, wodurch es zu einem Spannen des flexiblen Abschnitts 14 kommt. Der flexible Abschnitt 14 kann jedoch nur geringfügig gespannt werden, sodass kurz nach einer geringen Wegstrecke die flache Seite des Hakens 26 in Anlage mit dem Widerhaken 90 kommt, der eine weitere Verlagerung und damit ein weiteres Spannen des flexiblen Abschnitts 14 verhindert.

Das Halteelement 88 stellt zudem sicher, wie bereits beschrieben, dass der flexible Abschnitt 14 seine Position relativ zu der darunter befindlichen Bodenfläche beibehält.

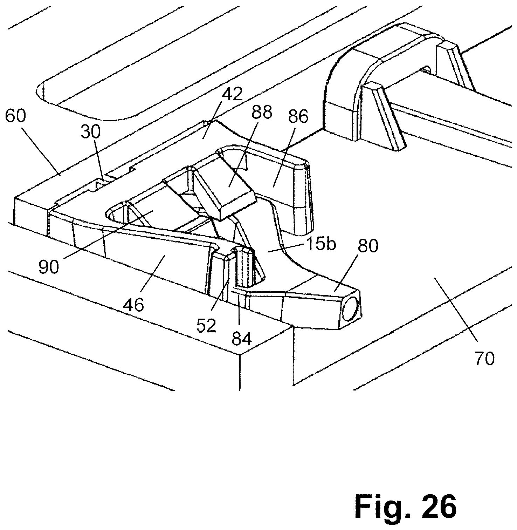

Fig. 26 zeigt schließlich eine perspektivische Darstellung der Ansicht von Fig. 23. Die beiden Komponenten 60 und 70 sind über die Schnapphaken 10 der siebten Ausführungsform und die Rasteinrichtungen 40 miteinander verriegelt. Das Erreichen der verriegelten Position kann akustisch wahrgenommen werden, wodurch aufwendige Sichtkontrollen der Rastverbindung entfallen können. Zudem kann durch die größere Längung des Schnapphakens 10, insbesondere des flexiblen Abschnitts 14, gegenüber den anderen Ausführungsformen eine sichere Verrastung bereitgestellt werden. Der Schnapphaken 10 der siebten Ausführungsform eignet sich daher insbesondere für Anwendungen, für welche keine hohen Toleranzvorgaben eingehalten werden müssen.

### Bezugszeichenliste

- 10: Schnapphaken
- 12: Basisabschnitt
- 14: flexibler Abschnitt
- 15a: erster Arm
- 15b: zweiter Arm
- 16: Verriegelungsabschnitt
- 17: dritter Arm
- 18: Rückseite
- 20: Oberseite
- 22: Unterseite
- 24: Öffnung
- 25: Haken
- 26: Haken
- 28: zweiter Anschlag
- 30: erster Anschlag
- 32: Rastfläche
- 34: Bereich
- 36: Federarm
- 37: zweiter Verriegelungsabschnitt
- 38: Rastarm
- 40: Rasteinrichtung
- 42: Bügel
- 44: Öffnung
- 46: Rastelement
- 48: Hakenanordnung
- 50: Rampe
- 52: Rastabschnitt
- 54: Rastfläche
- 56: Auflagefläche
- 60: erste Komponente
- 62: Anschlag
- 70: zweite Komponente
- 72: Wand
- 74: Stufen
- 80: Abschnitt
- 82: Schräge
- 84: Haken
- 86: Wand
- 88: Halteelement
- 90: Widerhaken

## Patentansprüche

1. Anordnung, aufweisend mindestens einen Schnapphaken (10) für eine spielfreie und robuste Verrastung zweier Komponenten und mindestens eine korrespondierende Rasteinrichtung (40), wobei
- der mindestens eine Schnapphaken (10) einen Basisabschnitt (12) und einen Verriegelungsabschnitt (16) aufweist,
- der Basisabschnitt (12) und der Verriegelungsabschnitt (16) über einen flexiblen Abschnitt (14) miteinander verbunden sind und der flexible Abschnitt (14) federnde Eigenschaften aufweist,
- der flexible Abschnitt (14) einen schräg sich vom Basisabschnitt (12) erstreckenden ersten Arm (15a) und einen sich wiederum schräg vom ersten Arm (15a) erstreckenden zweiten Arm (15b) aufweist, an dessen Ende der Verriegelungsabschnitt (16) ausgebildet ist, wobei ein Verbindungsbereich zwischen dem ersten Arm (15a) und dem zweiten Arm (15b) liegt,
- der Verriegelungsabschnitt (16) einen Abschnitt (80) mit einer Schräge (82) aufweist,
- der mindestens eine Schnapphaken (10) an einer ersten Komponente (60) und die mindestens eine korrespondierende Rasteinrichtung (40) an einer zweiten Komponente (70) angeordnet sind,
- im verrasteten Zustand des mindestens einen Schnapphakens (10) und der mindestens einen korrespondierenden Rasteinrichtung (40) der Verriegelungsabschnitt (16) des mindestens einen Schnapphakens (10) mindestens einen Rastabschnitt (52) der mindestens einen Rasteinrichtung (40) hintergreift,
- der flexible Abschnitt (14) gegenüber einem nicht verrasteten Zustand gespannt ist, und
- die mindestens eine Rasteinrichtung (40) ein Halteelement (88) aufweist, welches im eingesetzten Zustand des mindestens einen Schnapphakens (10) einen Druck auf den flexiblen Abschnitt (14) ausübt,
**dadurch gekennzeichnet, dass** die mindestens eine Rasteinrichtung (40) ein Bügel (42) ist und dieser Bügel (42) eine Wand (86) und ein der Wand (86) gegenüberliegendes Rastelement (46) mit dem mindestens einen Rastabschnitt (52) aufweist, wobei sich die Wand (86) und das gegenüberliegende Rastelement (46) in Einschubrichtung des mindestens einen Schnapphakens (10) erstrecken und während des Einbringens des mindestens einen Schnapphakens (10) gleitet der Abschnitt (80) des Verriegelungsabschnitts (16) durch den Bügel (42) hindurch, über die Schräge (82) an der Innenseite des Rastelements (46) an der mindestens einen Rasteinrichtung (40) entlang, wobei der Verbindungsbereich des ersten Arms (15a) und des zweiten Arms (15b) gegen die Wand (86) gedrückt wird und der Verriegelungsabschnitt (16) über die Schräge (82) gestaucht wird und der Schnapphaken (10) gelängt wird, wobei der Verriegelungsabschnitt (16) einen größeren Abstand zum Basisabschnitt (12) aufweist und nach dem Überfahren des mindestens einen Rastabschnitts (52) der zweite Arm (15b) zurückfedert und den mindestens einen Rastabschnitt (52) hintergreift.

2. Anordnung nach Anspruch 1, wobei am Basisabschnitt (12) ein dritter Arm (17) angeordnet ist, der sich orthogonal vom Basisabschnitt (12) erstreckt und eine Abzugssicherung quer zur Verriegelung über den Verriegelungsabschnitt (16) bereitstellt.

3. Anordnung nach Anspruch 1 oder 2, wobei der erste Arm (15a) unter einem Winkel zwischen 50° und 80° zum Basisabschnitt (12) angeordnet ist.

4. Anordnung nach einem der Ansprüche 1 bis 3, wobei der zweite Arm (15b) unter einem Winkel zwischen 60° und 90° zum ersten Arm (15a) angeordnet ist.

5. Anordnung nach einem der Ansprüche 1 bis 4, wobei die Weite der Schräge (82) in Einführrichtung des Schnapphakens (10) zunimmt.

6. Anordnung nach Anspruch 5, wobei der Abschnitt (80) einen Haken (84) aufweist, der entgegengesetzt zur Einführrichtung gerichtet ist.

7. Anordnung nach einem der Ansprüche 1 bis 6, wobei an dem Basisabschnitt (12) ein erster Anschlag (30) angeordnet ist.

8. Anordnung nach Anspruch 7, wobei der erste Anschlag (30) in einer Ebene verläuft, die sich orthogonal zu einer Ebene erstreckt, in der sich der Basisabschnitt (12), der flexible Abschnitt (14) und der Verriegelungsabschnitt (16) erstrecken.

9. Anordnung nach Anspruch 7 oder 8, wobei sich der erste Anschlag (30) im Bereich des dritten Arms (17) befindet.

## Claims

1. An arrangement, comprising at least one snap-in hook (10) for play-free and sturdy latching of two components and at least one corresponding latching device (40), wherein
- the at least one snap-in hook (10) has a base section (12) and a locking section (16),
- the base section (12) and the locking section (16) are connected to one another by means of a flexible section (14), and the flexible section (14) has resilient properties,
- the flexible section (14) has a first arm (15a) extending obliquely from the base section (12) and a second arm (15b), extending obliquely in turn from the first arm (15a), at the end of which the locking section (16) is formed, wherein a connecting region is located between the first arm (15a) and the second arm (15b),
- the locking section (16) has a section (80) with a bevel (82),
- the at least one snap-in hook (10) is arranged on a first component (60), and the at least one corresponding latching device (40) is arranged on a second component (70),
- in the latched state of the at least one snap-in hook (10) and the at least one corresponding latching device (40), the locking section (16) of the at least one snap-in hook (10) engages behind at least one latching section (52) of the at least one latching device (40),
- the flexible section (14) is tensioned with respect to an unlocked state, and
- the at least one latching device (40) has a retaining element (88) which exerts a pressure on the flexible section (14) when the at least one snap-in hook (10) is inserted, **characterised in that** the at least one latching device (40) is a bracket (42), and this bracket (42) has a wall (86) and a latching element (46) positioned opposite the wall (86) with the at least one latching section (52), wherein the wall (86) and the latching element (46) positioned opposite extend in the insertion direction of the at least one snap-in hook (10), and during the insertion of the at least one snap-in hook (10), the section (80) of the locking section (16) slides through the bracket (42), over the bevel (82) on the inside of the latching element (46) along the at least one latching device (40), wherein the connecting region of the first arm (15a) and the second arm (15b) is pressed against the wall (86), and the locking section (16) is compressed over the bevel (82) and the snap-in hook (10) is elongated, wherein the locking section (16) is at a greater distance from the base section (12) and, after passing over the at least one latching section (52), the second arm (15b) springs back and engages behind the at least one latching section (52).

2. An arrangement according to claim 1, wherein a third arm (17) is arranged on the base section (12), which extends orthogonally from the base section (12) and provides a trigger safety device transverse to the locking by means of the locking section (16).

3. An arrangement according to claim 1 or 2, wherein the first arm (15a) is arranged at an angle of between 50° and 80° to the base section (12).

4. An arrangement according to one of claims 1 to 3, wherein the second arm (15b) is arranged at an angle of between 60° and 90° to the first arm (15a).

5. An arrangement according to one of claims 1 to 4, wherein the width of the bevel (82) increases in the insertion direction of the snap-in hook (10).

6. An arrangement according to claim 5, wherein the section (80) has a hook (84) which is positioned in the direction opposite to the insertion direction.

7. An arrangement according to one of claims 1 to 6, wherein a first stop (30) is arranged at the base section (12).

8. An arrangement according to claim 7, wherein the first stop (30) extends in a plane orthogonal to a plane in which the base section (12), the flexible section (14) and the locking section (16) extend.

9. Arrangement according to claim 7 or 8, wherein the first stop (30) is located in the region of the third arm (17).

## Revendications

1. Dispositif présentant au moins un crochet d'encliquetage (10) pour un encliquetage robuste et sans jeu de deux composants et au moins un dispositif à cran (40) correspondant, où
- le au moins un crochet d'encliquetage (10) présente une section de base (12) et une section de verrouillage (16),
- la section de base (12) et la section de verrouillage (16) sont reliées entre elles par une section flexible (14), et la section flexible (14) présente des propriétés élastiques,
- la section flexible (14) comprend un premier bras (15a) qui s'étend obliquement depuis la section de base (12) et un second bras (15b) qui s'étend à son tour obliquement depuis le premier bras (15a), à l'extrémité duquel la section de verrouillage (16) est formée, une zone de jonction étant située entre le premier bras (15a) et le second bras (15b),
- la section de verrouillage (16) présente une section (80) avec un biseau (82),
- le au moins un crochet d''encliquetage (10) est disposé sur un premier composant (60) et le au moins un dispositif à cran (40) correspondant est disposé sur un deuxième composant (70),
- à l'état enclenché du au moins un crochet d'encliquetage (10) et du au moins un
dispositif à cran (40) correspondant,
la section de verrouillage (16) du au moins un crochet d'encliquetage (10) s'engage derrière au moins une section d'encliquetage (52) du au moins un dispositif à cran (40),
- la section flexible (14) est tendue par rapport à un état non enclenché, et
- le au moins un dispositif à cran (40) présente un élément de retenue (88) qui exerce une pression sur la section flexible (14) dans l'état inséré du au moins un crochet d'encliquetage (10)**,caractérisé, en ce que** le au moins un dispositif à cran (40) est un étrier (42) et que cet étrier (42) présente une paroi (86) et un élément d'encliquetage (46) opposé à la paroi (86) avec la au moins une section d'encliquetage (52), où la paroi (86) et l'élément d'encliquetage (46) opposé s'étendent dans le sens d'insertion du au moins un crochet
d'encliquetage (10) et, pendant l'insertion du au moins un crochet d'encliquetage (10), la section (80) de la section de verrouillage (16) glisse à travers l'étrier (42), le long du au moins un dispositif à cran (40) au moyen du biseau (82) sur le côté intérieur de l'élément d'encliquetage (46), où la zone de jonction du premier bras (15a) et du deuxième bras (15b) est pressée contre la paroi (86) et la section de verrouillage (16) est comprimée par l'intermédiaire du biseau (82) et le crochet d'encliquetage (10) est allongé, la section de verrouillage (16) présentant une plus grande distance par rapport à la section de base (12) et, après le passage de la au moins une section
d'encliquetage (52), le deuxième bras (15b) revenant comme un ressort à sa position initiale et saisissant par derrière la au moins une section d'encliquetage (52).

2. Dispositif selon la revendication 1, dans lequel un troisième bras (17) est disposé sur la section de base (12), s'étendant orthogonalement à partir de la section de base (12) et fournissant un blocage de détente transversal au verrouillage via la section de verrouillage (16).

3. Dispositif selon la revendication 1 ou 2, où le premier bras (15a) est disposé selon un angle compris entre 50° et 80° par rapport à la section de base (12).

4. Dispositif selon l'une des revendications 1 à 3, dans lequel le deuxième bras (15b) est disposé selon un angle compris entre 60° et 90° par rapport au premier bras (15a).

5. Dispositif selon l'une des revendications 1 à 4, dans lequel la largeur du biseau (82) augmente dans le sens d'insertion du crochet d'encliquetage (10).

6. Dispositif selon la revendication 5, où la section (80) présente un crochet (84) qui est orienté dans le sens opposé au sens d'insertion.

7. Dispositif selon l'une des revendications 1 à 6, dans lequel une première butée (30) est disposée sur la section de base (12).

8. Dispositif selon la revendication 7, dans lequel la première butée (30) se trouve dans un plan qui s'étend orthogonalement à un plan dans lequel s'étendent la section de base (12), la section flexible (14) et la section de verrouillage (16).

9. Dispositif selon la revendication 7 ou 8, dans lequel la première butée (30) est située au niveau du troisième bras (17).
